# EUROPEAN PATENT SPECIFICATION

(11) **EP 0 235 431 B1**
(45) Date of publication and mention of the grant of the patent: **22.06.1994**
(21) Application number: 86306518.1
(22) Date of filing: 22.08.1986
(51) Int. Cl.: C01B 33/34, C09C 1/40, A01N 59/16, A01N 25/08, A01N 59/20, C08K 3/34

(54) **Amorphous aluminosilicate & process for producing the same**
Amorfes Alumosilikat und Verfahren zu dessen Herstellung
Aluminosilicate amorphe et son procédé de fabrication

(30) Priority: 23.08.1985 JP 185634/85; 23.08.1985 JP 185635/85
(43) Date of publication of application: 09.09.1987
(73) Proprietor: Hagiwara Research Corporation, Kusatsu-shi Shiga-ken (JP); KANEBO, LTD., Tokyo 131 (JP)
(72) Inventor: Hagiwara, Zenji, Kusats-shi Shiga-ken (JP); Ando, Satoshi, Osaka-shi Osaka (JP); Nohara, Saburo, Nishinomiya-shi Hyogo-ken (JP)
(74) Representative: Cropp, John Anthony David

(56) References cited:
- EP-A- 0 097 512
- EP-A- 0 103 214
- FR-A- 1 061 158
- FR-A- 2 237 839
- US-A- 3 783 125
- US-A- 3 783 125
- US-A- 4 126 574
- PATENT ABSTRACTS OF JAPAN, vol. 7, no. 277 (C-199)[1422], 9th December 1983; & JP-A-58 156 527 (TAKI KAGAKU K.K.) 17-09-1983

## Description

This invention relates to a novel amorphous aluminosilicate and a process for producing the same.

This invention also relates to an active material in the form of fine particles, which is suitable as a filler, obtained by carrying out thermal treatment of the amorphous aluminosilicate. Particularly, this invention relates to an amorphous aluminosilicate composition in the form of porous fine particles having ion exchanging ability; a process for producing the same economically; a process for ion-exchanging the sodium ion of the aluminosilicate with another ion; and a process for producing a filler material in the form of fine particles.

The present invention also relates to a novel amorphous aluminosilicate (hereinafter referred to as "AMAS") which is bactericidal with respect to various types of bacteria and fungi.

The amorphous aluminosilicate composition of the present invention has poor hygroscopicity and good dispersing quality, so it is suitable as a filler from the viewpoint of its physical and chemical properties. The filler of this invention can be used as a filler for paper, fibers, plastics, natural rubbers, synthetic rubbers, pigments, coating agents and the like.

The present aluminosilicate is only slightly soluble in water, and has good thermal resistance, good water proofness and considerable ion exchanging ability as mentioned in the following description.

It is well known that silver and copper have a bactericidal action. For example, silver has heretofore been widely used as a disinfectant in the form of an aqueous solution (Ag⁺) such as silver nitrate. However, silver in the form of a solution is inconvenient to handle and, therefore, the range of use of silver as a disinfectant is disadvantageously limited. It is also known to utilize silver or a compound thereof for bactericidal purposes by allowing an adsorptive substance such as activated charcoal, alumina or silica gel to adsorb silver or a compound thereof. Such conventional practice, that is, simple physical adsorption of an antibacterial metal or a compound thereof by an adsorptive substance such as those described above, is, however, unsatisfactory from the viewpoint of the lasting quality of the bactericidal and antibacterial effects of such agents in an activated state, the preservation of a necessary amount of an antibacterial agent in a stable condition, and the ionizing power.

EP 0097517 discloses a process for the preparation of amorphous aluminosilicate by mixing together an aqueous sodium silicate solution and an aqueous aluminate solution at 45°C. FR 2237839 describes a process for producing amorphous and/or crystalline aluminosilicates for use as detergency builders in which sodium aluminate is mixed with sodium hydroxide in water and concentrated sodium silicate solution is added followed by heating.

The present inventors have made research on the economical synthesis of an amorphous aluminosilicate. As a result, we have found that finely divided aluminosilicate particles having a relatively limited hydrophilic nature can be deposited by adjusting certain factors which participate in the reaction and that the cation exchanging ability of the aluminosilicate can be enlarged.

The present inventors also made various efforts to overcome the disadvantages of the conventional inorganic antibacterial agents. As a result, the inventors have found that the above-described problems of the prior art can be solved by a method wherein an antibacterial metal in an ionic state is fixed and stabilized on a specific porous amorphous silicate having a specific surface area of at least 5 m²/g, and that this method enables an ideal antibacterial or bactericidal action by an antibacterial metal in an excited state and also in an economical amount of antibacterial metal ions held on a parent body, and offers a large number of advantages in terms of a long lasting antibacterial effect and the stability and heat resistance of an antibacterial substance, etc. Thus the above-described preparation is expected to be effectively and widely utilized. This invention is based on these discoveries.

According to one embodiment of the present invention there is provided a process for producing an amorphous aluminosilicate having the formula:

xNa₂O.Al₂O₃.ySiO₂

wherein x is a number between 0.6 and 1.8 inclusive; and y is a number between 1.3 and 50 inclusive; which comprises;
maintaining an alkali solution (Solution-C), the alkalinity of which is within the range of 1.2 - 3.5 N under stirring:
adding a sodium aluminate solution (Solution-A),containing free alkali, and sodium silicate solution or colloidal silica solution (Solution-B) containing free alkali, to Solution-C, separately to prepare a slurry which contains an amorphous sodium aluminosilicate in the form of finely divided particles which are only slightly soluble in water; and
after completing said addition, aging the slurry at 55°C or lower, the addition of Solution-A and Solution-B into Solution-C being carried out so that the Si:Al ratio in the resultant mixture is kept within the range of 2.4 to 7.6 during and after the addition, and mixing effected at 55°C or lower, and Solution-A and Solution-B being prepared so that the alkalinity of the aqueous solution phase during the formation of the slurry and during the aging is kept within ± 0.30 N of the alkalinity of Solution-C.

According to a second embodiment of the present invention there is provided a process for producing an amorphous aluminosilicate having the formula:

xM_{2/n}O.Al₂O₃.ySiO₂

wherein M is at least one element selected from the group consisting of potassium, lithium, calcium, magnesium, cobalt (II), iron (II), nickel (II) and ammonium ion; n is the valence of M; x is a number between 0.6 and 1.8 inclusive; and y is a number between 1.3 and 50 inclusive; which comprises ion-exchanging all or part of the Na in the sodium aluminosilicate of the above first embodiment with M by using a solution containing one or more of these metal ions.

According to a third embodiment of the present invention there is provided a process for preparing an amorphous aluminosilicate having an antibacterial and/or bactericidal action of the formula:

xM_{2/n}O.Al₂O₃.ySiO₂

wherein M is at least one element selected from the group consisting of silver, copper, zinc, mercury, tin, lead, bismuth, cadmium and chromium; n is the valence of M; x is a number between 0.6 and 1.8 inclusive; and y is a number between 1.3 and 50 inclusive; which comprises ion-exchanging the Na in the aluminosilicate of the above first embodiment with at least one element selected from the group consisting of silver, copper, zinc, mercury, tin, lead, bismuth, cadmium and chromium
According to a fourth embodiment of the present invention there is provided a process for preparing a composition having an antibacterial and/or bactericidal action, which comprises an amorphous aluminosilicate of the formula:

xM_{2/n}O.Al₂O₃.ySiO₂

wherein M is at least one element selected from the group consisting of silver, copper, zinc, mercury, tin, lead, bismuth, cadmium and chromium; n is the valence of M; x is a number between 0.6 and 1.8 inclusive; and y is a number between 1.3 and 50 inclusive and, an amorphous aluminosilicate of the formula:

x'M'_{2/n'}O.Al₂O₃.y'SiO₂

wherein M' is sodium; n' is the valence of M'; x' is a number between 0.6 and 1.8 inclusive; and y' is a number between 1.3 and 50 inclusive which comprises:
ion-exchanging the Na in the aluminosilicate of the above first embodiment partially with at least one element selected from the group consisting of silver, copper, zinc, mercury, tin, lead, bismuth, cadmium and chromium.

According to a further embodiment of the present invention there is provided a composition containing amorphous aluminosilicate solid particles, the composition an organic polymer and amorphous aluminosilicate solid particles, some or all of which hold metal ions having on ion-exchangeable sites existing on and within the particles, said metal ions having a bactericidal or antibacterial action, said amorphous aluminosilicate solid particles having a specific surface area of at least 5m²/g and a SiO₂/Al₂O₃ molar ratio between 1.3 and 50 inclusive, said metal ions being one or more metal ions selected from silver, copper, zinc, mercury, tin, lead, bismuth, cadmium and chromium.

The amorphous aluminosilicate solid particles preferably consist essentially of an amorphous aluminosilicate of the formula:

xM_{2/n}O.Al₂O₃.ySiO₂

in which M is one element selected from silver, copper, zinc, mercury, tin, lead, bismuth, cadmium, chromium and mixtures thereof; x is a number between 0.6 and 1.8 inclusive, y is a number between 1.3 and 30 inclusive and n is the valence of M,
and an amorphous aluminosilicate of the formula

xM'_{2/n}O.Al₂O₃.ySiO₂

where M' is monovalent or divalent metal having ion exchangeability and different from the element expressed as M, x is a number between 0.6 and 1.8 inclusive, y is a number between 1.3 and 30 inclusive and n is the valence of M'.

According to a still further embodiment of the present invention there is provided the use of amorphous aluminosilicate solid particles, some or all of which hold metal ions on ion-exchangeable sites existing on and within the particles, said metal ions having a bactericidal or antibacterial action, said amorphous aluminosilicate solid particles ions having a specific surface area of at least 5m²/g and a SiO₂/Al₂O₃ molar ratio between 1.3 and 50 inclusive, said metal ions being one or more metal ions selected from silver, copper, zinc, mercury, tin, lead, bismuth, cadmium and chromium, as a filler for polymers.
Fig. 1-A is X-ray diffraction pattern of the product of Example 2;
Fig. 1-B is X-ray diffraction pattern of the product of Control Test 1;
Fig. 2 is graph showing water adsorption isotherm (25°C) of various materials;
Fig. 3 is graph showing water adsorption with time of the present aluminosilicate;
Fig. 4 is X-ray diffraction pattern of the calcium-exchanged aluminosilicate;
Fig. 5 is X-ray diffraction pattern of the potassium aluminosilicate;
Fig. 6 is electron micrograph of the product of Example 1;
Fig. 7 is electron micrograph of the product of Control Test 1;
Fig. 8 shows X-ray diffraction patterns of Ag-AMAS obtained in Example 6-A;
Fig. 9 shows X-ray diffraction patterns of Ag-AMAS obtained in Example 6-C;
Fig. 10 shows X-ray diffraction patterns of Cu-AMAS obtained in Example 7-A;
Fig. 11 shows an X-ray diffraction pattern of Zn-AMAS obtained in Example 8-A;
Fig. 12 shows an X-ray diffraction pattern of Zn-AMAS obtained in Example 8-B;
Fig. 13 shows an electro microscopic photograph of Cu-AMAS obtained in Example 7-A, in which the length of the reversed white portion of is 1 »m;
Fig. 14 shows an X-ray diffraction pattern of a dried powder of the amorphous aluminosilicate obtained in Control Test 2; and

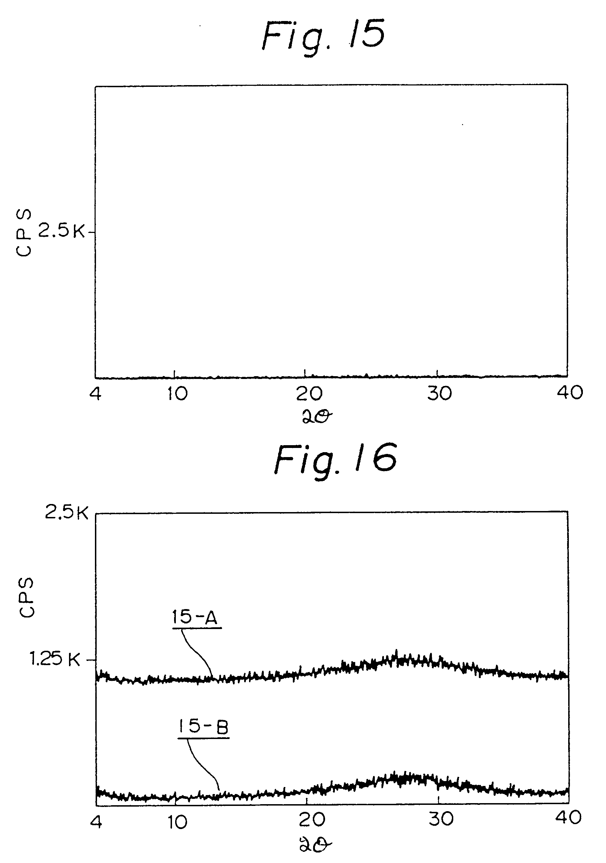

Figs. 15 and 16 show X-ray diffraction patterns of amorphous aluminosilicates partially converted into calcium and potassium, respectively.

The amorphous aluminosilicate composition of the present invention is porous and has a specific surface area (SSA) of at least 5 m²/g (on a dry basis). According to the process of the present invention, an amorphous aluminosilicate composition having a large SSA ranging from several tens to several hundred square meter per gram can be readily obtained. The composition is represented by the formula: 0.6 - 1.8M$\frac{\text{2}}{\text{n}}$O·Al₂O₃·1.3 - 50SiO₂ e.g. 0.6 - 1.8 M_{2/n}O.Al₂O₃.1.3 - 3.6SiO₂. The composition as synthesized is in the form of fine particles in a slightly hydrated state. As already mentioned, the synthesized product is amorphous that is non-crystalline (completely amorphous when examined by X-ray diffraction or under an electron microscope). According to the method of synthesis of the present invention, M in the above-specified formula is usually sodium and, hence, fine grains having the composition represented by 0.6 - 1.8Na₂O·Al₂O₃·1.3 - 50SiO₂ (practically insoluble in water) are obtained. The present inventors confirmed that M (Na in the case of employing the method of synthesis of the present invention) has an ion-exchanging ability and can be readily displaced by a mono- or divalent metallic ion that is illustrated by a cation such as potassium lithium, ammonium (NH₄⁺), iron (II), magnesium (II), calcium (II), cobalt (II), or nickel (II). The degree of displacement of M by these metallic ions depends on such factors as the state of valency and the size of hydrated ions. The amorphous aluminosilicate (M = Na; true specific gravity ≃ 2) having the composition specified above which is obtained by the method of synthesis of the present invention has an extremely small particle diameter and the average particle diameter (Dav) as measured under examination with a scanning electron microscope (SEM) is no larger than 0.5 »m. The value of Dav varies with the reaction conditions used in the synthesis of the aluminosilicate but in a typical case Dav is no greater than 0.3 »m. The amorphous aluminosilicate obtained by the method of synthesis of the present invention is filtered by, for example, a centrifuge or a filter press, washed with water to remove the free alkali from the solid phase, dried by heating at 100 - 110°C, and ground to the final product. During the steps of filtering and drying, some of the primary fine particles of which the amorphous aluminosilicate is composed agglomerate to form larger secondary particles, which can be reduced in size by disintegration or grinding with an appropriate apparatus such as a grinder by the soft or wet method. By employing these procedures, the amorphous aluminosilicate of the present invention can be readily processed into fine particles having a Dav of no larger than 6 »m, typically between 0.01 and 1 »m, as measured by the photo-extinction method.

The amorphous aluminosilicates of the present invention are explained in the following description:
An alkali solution (Solution-C) the alkalinity of which is within the range of 1.2 to 3.5 N is maintained under stirring. Into Solution-C are separately added a predetermined amount of a sodium aluminate solution (Solution-A) containing free alkali and a predetermined amount of a sodium silicate solution (Solution-B) containing free alkali, so as to prepare a slurry which contains an amorphous aluminosilicate (principal component: Na₂O-Al₂O₃-SiO₂) constituted by finely divided particles which are only slightly soluble in water. Then, the slurry is aged to produce an amorphous aluminosilicate. In this method, the addition of Solution-A and Solution-B into Solution-C is carried out so that the Si/Al ratio in the resultant mixture may be kept within the range of 2.4 to 7.6 (SiO₂/Al₂O₃ ratio = 1.2 - 3.8) during and after the addition, and the mixing is effected at 55°C or lower. In addition, Solution-A and Solution-B are prepared so that both the alkalinity of the aqueous solution phase during the formation of the slurry and that during the maturing is kept within ±0.30 N of the alkalinity of Solution-C as prepared in advance in order to suppress any fluctuation of the alkalinity throughout the process, thereby producing an aluminosilicate of the formula:

xM₂O·Al₂O₃·ySiO₂

(wherein x and y are the same as defined above).

The other compounds having an ion exchange metal, can be derived by ion exchange of the above-described sodium-substituted compound.

The "alkalinity" referred to in the present invention is measured in the following:

A definite amount of a sample is taken out from the water phase. If necessary, the sample is diluted with water. Phenolphthalein (an indicator) is added to the sample which is then titrated with a standard hydrochloric acid solution to obtain the alkalinity.

It is preferable that the alkalinity of the slurry is maintained at 1.2 - 3.5 N. Furthermore, it is preferable that Solution-A, Solution-B and Solution-C are adjusted so that the ratio of Na to Al in the slurry is within 1.1 - 6.7.

As mentioned before, Solution-A used in the present invention is a solution of sodium aluminate containing an excess amount of free alkali. This solution may be readily prepared by adding an excess amount of a strong alkali (sodium hydroxide) to aluminum hydroxide or other appropriate aluminum salt. This solution is the source of alumina (Al₂O₃) which is necessary for the synthesis of the amorphous aluminosilicate; at the same time, the solution also serves as a source of supplying part of the alkali (Na₂O). Solution-B, as already mentioned, is a solution of sodium silicate containing a free alkali; this solution is the source of silica (SiO₂) which is necessary for the synthesis of the amorphous aluminosilicate and, at the same time, it also serves as a source of supplying part of the alkali (Na₂O). A suitable example of the Solution-B is a commercial product of sodium silicate or water glass solution (grade No. 3, JIS) or a combination thereof with an appropriate amount of an alkali. Solution-C which has already been explained is an aqueous solution of sodium hydroxide having a known concentration and an alkalinity which is within the range of 1.2 - 3.5 N. As already mentioned, it is important to prepare the three feed solutions, A, B and C, in such a manner that the following conditions are met: upon completion of the mixing of the three solutions in their predetermined amounts, the molar ratios of Na₂O/Al₂O₃ and SiO₂/Al₂O₃ in the mixture are within the ranges of 1.1 - 6.7 (Na/Al = 1.1 - 6.7) and 1.2 - 3.8 (Si/Al = 2.4 - 7.6), respectively, and the alkalinity of the resulting slurry solution is at a certain concentration within ±0.30 N of the alkalinity of the preliminarily prepared Solution-C. In the present invention, the three feed solutions are mixed together such that the aforementioned conditions are met. A preferable method of mixing is specifically described below: predetermined amounts of Solutions A and B are charged, individually and at predetermined rates, into a reaction vessel which contains Solution-C that maintains, in an agitated state, a certain value of alkalinity within the range of 1.2 - 3.5 N. In this case, the rates of charging Solutions A and B differ from each other depending upon the concentrations of these solutions and the amounts of their use, but preferably the charging of the predetermined amount of Solution-A is completed almost simultaneously with the charging of the predetermined amount of Solution-B. It is essential for the present invention that the compositions and concentrations of the three feed solutions are adjusted at the time of their preparation such that the slurry solution which forms as a result of the mixing of Solutions A, B and C has an alkalinity within the range of 1.2 - 3.5 N and that the molar ratios of Na₂O/Al₂O₃ and SiO₂/Al₂O₃ in the mixture are within the ranges of 1.1 - 6.7 (Na/Al = 1.1 - 6.7) and 1.2 - 3.8 (Si/Al = 2.4 - 7.6), respectively. In order to eventually obtain the fine particles of a homogeneous amorphous aluminosilicate, it is preferable that the three feed solutions are mixed together at a temperature of 55°C or below, say, in the temperature range of 5 - 40°C. Therefore, most preferably, each of the feed Solutions A, B and C is held at 55°C or below prior to their mixing. As already mentioned, the primary particles in the amorphous aluminosilicate formed at a temperature of 55°C or below in accordance with the novel mixing method of the present invention have an extremely small average diameter (Dav ≦0.5 »m, typically less than 0.1 »m, as measured under examination with SEM). The silicate was verified to have a composition which was within the scope of 0.6 - 1.8Na₂O·Al₂O₃·1.3 - 3.6SiO₂·xH₂O on the basis of alumina. For the reasons stated above, the slurry of the amorphous aluminosilicate is preferably formed and ripened at a temperature of 55°C or below. If slurry formation is effected at temperatures higher than 55°C, the increased temperature or prolonged reaction time will cause part of the resulting amorphous material to crystallize, impairing the homogeniety of the amorphous particles.

It is easy to maintain the alkalinity of the resulting slurry solution within the range specified above and to hold the molar ratios of Na₂O/Al₂O₃ and SiO₂/Al₂O₃ within the specified ranges during mixing of the feed materials. This can be achieved by adjusting the compositions and alkalinities of the three feed solutions, A, B and C, during preparation of the individual solutions such that constant values of alkalinity and molar ratios are attained when the solutions are mixed together by the procedures described above. In accordance with the method of the present invention for adding Solutions A and B (at 55°C or below), the slurry mixture will form in such a manner that the alkalinity of the liquid phase is always held substantially constant, and this provides the advantage that the amorphous aluminosilicate can be produced with a minimum variation in its composition. As Solutions A and B are individually charged into the reaction vessel containing Solution-C in a stirred condition in accordance with the unique method of the present invention, the amount of the slurry mixture produced will increase gradually, but the alkalinity in the reaction vessel is held constant until the formation of the slurry and its ripening are completed. This is because the compositions of Solutions A and B are precisely adjusted during their preparation such that they have an alkalinity which is substantially equal to that of Solution-C. What is characteristic of the present invention is that by adding feed Solutions A and B individually to Solution-C and mixing them together with the alkalinity of the mixture being held constant, a slurry solution is obtained that contains extremely fine amorphous aluminosilicate particles which are homogeneous and experience a minimum variation in composition. The fine grains of the poorly soluble amorphous aluminosilicate which is obtained by practising the method of synthesis of the present invention in combination with its unique method of mixing the feed materials have the features that are summarized below.
(i) In the present invention, slurry particles are produced under such conditions that the alkalinity of the aqueous phase and the molar ratios of the feed materials are held constant, so that the resulting amorphous aluminosilicate is homogenous and is formed of fine particles.
(ii) The fine particles of the amorphous aluminosilicate prepared by the method of the present invention are uniform in shape and the primary particles have an average diameter (Dav) of 0.5 »m or less, typically no larger than 0.3 »m (as measured under examination with SEM).
(iii) The process of the present invention is so designed that homogeneous particles (true specific gravity ∼ 2) are formed by not only maintaining a constant alkalinity and temperature but also by avoiding the occurrence of localized concentrations during the mixing of the feed materials. The resulting particles are porous and homogeneous, with their composition being within the range of 0.6 - 1.8Na₂O·Al₂O₃· 1.3 - 3.6SiO₂. Since the particles have a specific surface area of at least 5 m²/g, they have the additional advantage of an extremely high activity.
(iv) The fine-grained amorphous aluminosilicate (Na₂O-Al₂O₃-SiO₂-H₂O) which is obtained by the method of the present invention will experience a very small degree of variation in its chemical composition and, hence, retains a desirably large ion-exchange capacity.
(v) The fine aluminosilicate particles obtained by the method of the present invention have an extremely high degree of activity and have been found to have characteristics that render them suitable for use as an inorganic filler.
(vi) The fine-grained amorphous aluminosilicate obtained by the method of the present invention are extremely low in hydroscopicity. This shows the suitability of this amorphous aluminosilicate for use as a filler in high-molecular weight materials.

Compositional analyses of the amorphous aluminosilicate obtained by the present invention were conducted by the following procedures and the results of these analyses were used to estimate the formula already set forth in the specification.
Na₂O --- An exact amount (0.1 - 0.2 g) of the amorphous aluminosilicate was weighed and dissolved in a mixture of water (10 ml) and HCl (2 N, 8 - 10 ml); water was added to make a total volume of 200 ml; a given amount of the solution was worked up by the standard addition method involving the addition of a predetermined amount of the standard sodium chloride solution, and the Na₂O content was determined by measuring the quantity of sodium by atomic absorption spectroscopy (Na determined as 589 nm). In measurement of the quantity of sodium, an aqueous solution of potassium chloride was used as an interference inhibitor.
Al₂O₃ --- An exact amount (0.1 - 0.2 g) of the amorphous aluminosilicate was weighed and dissolved in a mixture of water (10 ml) and HCl (2 N, 8 ml); to the solution, water was added to make a total volume of 200 ml; a given amount of the solution was taken and a given amount of 0.01 M standard EDTA solution (Na₂EDTA: ethylenediaminetetraacetic acid disodium salt) was added, followed by boiling for about 15 minutes; after cooling the solution, 20 ml of an acetic acid/ammonium acetate buffer (60 g CH₃COOH + 77 g CH₃COONH₄ + H₂O to make a total volume of 1,000 ml) and 70 ml of 99.5% ethyl alcohol were added; to the solution, several drops of a dithizone indicator solution (0.025 g dithizone + 99.5% C₂H₅OH to make a total volume of 100 ml) and reverse titration was conducted with 0.01 M standard zinc acetate solution so as to determine the quantity of aluminum for assaying the Al₂O₃ content.
SiO₂ --- An exact amount (0.1 - 0.2 g) of the amorphous aluminosilicate was weighed and dissolved in a mixture of water (10 ml) and HCl (2 N, 8 ml); to the solution, water was added to make a total volume of 200 ml; a given amount of the solution was put into a polyethylene beaker and, after addition of one or two drops of hydrofluoric acid (HF), 2 ml of 3 N H₂SO₄ and 5 ml of 10 w/v% ammonium molybdate, the mixture was held at 60 - 70°C for 1 - 2 minutes (on a hot water bath); the heated solution was left to cool for about 10 minutes and a 10 w/v% aqueous solution of tartaric acid (5 ml) and water were added to make a total volume of 100 ml; within 20 minutes thereafter, the content of silicon dioxide was determined by colorimetric analysis involving the measurement of light absorbance at 420 nm.

In ordinary synthesis of AMAS, it is extremely easy to prepare AMAS which is in the form of porous particles having a specific surface area (SSA) of at least 5 m²/g and an average particle diameter (Dav) of 6 »m. The above-described M has ion exchangeability, and M is exchanged with a necessary amount of at least one of the antibacterial or bactericidal metal ions described below so that the resulting AMAS of 5 m²/g SSA is stably maintained in a solid phase, whereby an active AMAS composition having antibacterial and bactericidal actions according to the present invention can be obtained.

AMAS which is employed in the present invention as a support for holding antibacterial metal ions is only slightly soluble in water, and it is highly resistant to heat and therefore stable in structure even at high temperatures. This AMAS has xM$\frac{\text{2}}{\text{n}}$Al₂O₃·ySiO₂ as a principal component as has already been described above, wherein M in the formula represents monovalent cations having ion exchangeability, e.g., Na, K, NH₄ or the like, or divalent cations having ion exchangeability, e.g., Mg, Ca, Fe or the like. It is a matter of course that the above-described AMAS may contain one of the aforementioned monovalent or divalent metals or two elements respectively selected from the monovalent and divalent metal groups. In addition, a small amount of polyvalent (trivalent or more) ions may be present in the AMAS. The ion exchange capacity of the AMAS depends on each component of the composition. More specifically, as the molar ratio of SiO₂/Al₂O₃, that is, y increases, the ion exchange capacity of the AMAS gradually decreases, while, as the coefficient x of M$\frac{\text{2}}{\text{n}}$O increases, the ion exchange capacity increases proportionally. For example, if it is assumed that x = 1 (content), when y = 2, the ion exchange capacity of AMAS having a composition of xNa₂O·Al₂O₃·ySiO₂ (exchangeable ion in this case is Na⁺) is 7.04 meq/g, whereas, when y = 3, the ion exchange capacity is 5.81 meq/g. When y = 7, the exchange capacity is 3.42 meq/g, whereas, when y = 10, it is 1.48 meq/g. Further, when Y = 30, the ion exchange capacity is 0.01 meq/g, whereas, when y = 50, it is only 0.63 meq/g. From the viewpoint of such characteristics of the ion exchange capacity, y is preferably 30 or less in order to allow AMAS to hold an effective amount of antibacterial metal ions, and the upper-limit value in the most preferable range of y is 7. AMAS (xM$\frac{\text{2}}{\text{n}}$O·Al₂O₃·ySiO₂), which may be employed as a raw material in the present invention and which is obtained through synthesis, is generally one of those wherein x ranges from 0.6 to 1.8 and y is not smaller than 1.3. Although an antibacterial composition according to the present invention can of course be prepared using as a raw material AMAS wherein y is 50 or more, the preferable range of y in the present invention is from 1.3 to 7 for the above-described reason. Accordingly, the present invention provides an AMAS composition having antibacterial and bactericidal actions of the formula: xM$\frac{\text{2}}{\text{n}}$O·Al₂O₃·ySiO₂, wherein M has ion exchangeability, while the coefficient x of the metallic oxide is within the range of 0.6 to 1.8 on the basis of alumina, and the coefficient y of the silicon dioxide is within the range of 1.3 to 7, a portion or the whole of M being substituted by metal ions having a bactericidal action. It should be noted that a small amount of polyvalent (trivalent or higher valency) cations may be present in the above-described composition.

As for the antibacterial metal (hereinafter referred to as "B") which is employed in the preparation of the antibacterial and bactericidal AMAS composition according to the present invention, one or more metals may be selected from the group consisting of silver, copper (monovalent or divalent), zinc, mercury (monovalent or divalent), tin (divalent or tetravalent), lead (divalent), bismuth (divalent), cadmium (divalent) and chromium (divalent or trivalent). A salt solution containing one or more of the above-specified antibacterial B ions and M̅ (a metal in the solid phase) in the above-specified AMAS are allowed to exchange ions with each other at ordinary or high temperatures and under appropriate conditions. In consequence, the antibacterial metal ions are held in the solid phase (B) through the reaction of M̅ + B ⇄ B + M, and an antibacterial and bactericidal AMAS composite according to the present invention is thereby obtained. The ion exchange for giving antibacterial power to AMAS should preferably be carried out in either a batch or column method.

It has been confirmed by the experiments described later that the antibacterial AMAS composition according to the present invention, obtained by the above-described method, is highly resistant against various types of bacteria and fungi and exhibits excellent bactericidal power. More specifically, it has been confirmed that the product according to the present invention has strong antibacterial and bactericidal powers by carrying out evaluation tests regarding the antibacterial effect against bacteria such as Staphylococcus aureus, Escherichia coli, Pseudonas aeruginosa, Candida albicans and Trichophyton mentagrophytes, together with measurement of the rate of death of fungi such as Aspergillus flavus and Aspergillus niger liquidated by the product of the present invention. In addition, a fungal resistance test was carried out through ASTM-G21 by inoculation of spores of the following five types of test fungi: Aspergillus niger (ATCC 9642), Penicillum funiculosum (ATCC 9644), Chaetomium globosum (ATCC 6205), Trichoderma SP (ATCC 9645) and Aureobasidium Pullulans (ATCC 9348). The results have been found to show that a polymeric molded product containing the antibacterial AMAS according to the present invention also has considerably high fungal resistance and maintains the antibacterial effect over a long period of time, and is therefore extremely effective (Example 16).

The following is a description of the relationship between the antibacterial effect and the content of an antibacterial metal (B) in an antibacterial and bactericidal AMAS according to the present invention. An antibacterial and bactericidal AMAS according to the present invention which contains silver as B (hereinafter referred to as ("Ag-AMAS") will first be explained.

An evaluation test regarding the antibacterial effect against Stapylococcus aureus, Pseudomonas aeruginosa and Escherichia coli was carried out using an Ag-AMAS powder of Dav = 0.2 »m containing 1.03% of silver [Example 5-A; Ag = 1.03% (dry product); SSA = 22 m²/g; and AMAS as a starting material, 1.10Na₂O·Al₂O₃·2.51SiO₂·xH₂O] with bacteria being cultured for 18 hours at 37°C and observed to establish whether or not an inhibition zone was formed. The results show that the AMAS according to the present invention which contains silver as B is extremely effective against all of the above-mentioned bacteria. It has also been confirmed that this Ag-AMAS is effective against Trichophyton mentagrophytes. Further, the same evaluation test was also carried out on an Ag-AMAS powder of Dav = 0.23 »m containing 0.22% of silver [Ag = 0.22% (dry product); SSA = 23 M²/g; AMAS as a starting material, 1.10Na₂O·Al₂O₃·2.51SiO₂ xH₂O], and it was confirmed that this Ag-AMAS was also effective against all of the above-mentioned bacteria. It has been further found that the above-described Ag-AMAS makes Trichophyton mentagrophytes die out completely (see Table 10). Next, an antibacterial evaluation test similar to the above was carried out on a product obtained by sintering the above-described Ag-AMAS containing 0.22% of silver at 500°C for 2 hours. The result confirmed that such a heat-treated product is also satisfactorily effective against bacteria. It is clear in view of these facts that the antibacterial and bactericidal Ag-AMAS according to the present invention has excellent heat resistance and that the antibacterial power of the product is not deteriorated even when it is heat-treated but is maintained advantageously. Then, the death rate of two types of fungi, i.e., Aspergillus flavus and Aspergillus niger, was measured by employing an Ag-AMAS powder of Dav = 0.2 »m having a relatively low silver content [Ag = 0.047% (dry product)] in place of the above-described Ag-AMAS's with the number of individuals surviving being measured after 48 hours at a temperature of 30°C. The death rate was 100% for the two types of fungi. The death rate of each of Aspergillus flavus and Aspergillus niger was then measured using an Ag-AMAS powder [Ag = 0.02% (dry product)] having a silver content lower than that of the above-described Ag-AMAS powder. Death rates of 99% and 100%, respectively, were observed (see Table 10). An Ag-AMAS having an even lower silver content was also found to be effective. It is also clear from these results that with the Ag-AMAS according to the present invention selection of a silver content in the range of 0.001 to 1% allows the product to exhibit a satisfactory bactericidal action in ordinary use. The optimal antibacterial metal (B) content which maximizes the effect of the antibacterial and bactericidal AMAS according to the present invention depends, as a matter of course, on the type of target bacterium or fungus and actual use conditions. The content of B̅ in AMAS may be increased according to need by utilizing the aforementioned ion exchange. For example, it is possible to readily keep the silver content in Ag-AMAS so as to be 10% or more by appropriately preparing Ag-AMAS using ion exchange (see Example 6-C).

Antibacterial compositions according to the present invention which contain copper, that is, Cu-AMAS, will be explained below. The death rate of fungi, i.e., Aspergillus flavus and Aspergillus niger, was measured using a Cu-AMAS powder of Dav = 0.2 »m containing 0.27% of copper [Cu = 0.27% (dry product); SSA = 56 m²/g; AMAS as a starting material, 1.03Na₂O·Al₂O₃·3.24SiO₂·xH₂O]. The results were 95% and 67% for the former and the latter, respectively. The measurement of the death rate of fungi was further carried out using a Cu-AMAS powder of Dav = 0.24 »m [Cu = 0.064% (dry product); SSA = 54 m²/g] which had a copper content lower than the above-Cu-AMAS and which was synthesized by employing the same starting material as that for the above. The death rate of Aspergillus flavus was 90%, while that of Aspergillus niger was 57%. As will be understood from these antibacterial tests, the required activity of Cu-AMAS according to the present invention is maintained even at a low copper content, such as 0.06%, and is still effective against fungi (see Table 11).

The death rate of Aspergillus flavus was measured using a Zn-AMAS of Dav = 0.6 »m containing 7.26% zinc [ Zn = 7.26% (dry product); SSA = 141 m²/g; AMAS as a starting material, 1.42Na₂O·Al₂O₃·6.04SiO₂·xH₂O]. The death rate was found to be 39%, and it has been confirmed that Zn-AMAS according to the present invention is also effective. Further, AMAS's respectively containing Pb²⁺, Bi²⁺, Cd²⁺, Cr³⁺, Sn²⁺ and Hg²⁺ as antibacterial metal ions were prepared and subjected to antibacterial evaluation and measurement of the death rate. In this case, Escherichia coli, Staphylococcus aureus, Pseudomonas aeruginosa, Aspergillus flavus, Aspergillus niger and Trichophyton mentagrophytes were employed as test fungi, and satisfactory results were obtained (see Tables 12 and 13).

Thus, according to the present invention, any one metal is selected from the group consisting of silver, copper, zinc, mercury, tin, lead, bismuth and cadmium, or two or more metals are selected from among them and compounded together, and the selected metal or the compound is held as a bactericidal metal on an AMAS as specified in the present invention to obtain a powerful antibacterial agent whose activity is long lasting. When two or more metals are selected from the above-described group and compounded to prepare an antibacterial agent, the synergistic effect displayed by these metals allows antibacterial and bactericidal powers to be exhibited against various types of bacteria and fungi in an even more preferable condition.

AMAS which is employed as a material in production of an antibacterial zeolite composition according to the present invention is amorphous as has already been described. Production examples of AMAS will be explained below.

This invention is further explained in the following non-limiting examples. All parts and percents are on a weight basis, unless specified otherwise.

### Example 1

This example relates to the preparation of an amorphous aluminosilicate. The starting solutions employed in this example were prepared in the following manner:

### Solution-A

To 2.12 kg of aluminum hydroxide [Al(OH)₃·xH₂O, where x is equal to about 3] were added 3.45 kg of 49% sodium hydroxide solution (density, 1.51) and water. The resulting mixture was heated to dissolve the components. Water was added to the mixture until the total volume amounted to 8.9 liters. The suspended materials were filtered to obtain a clear solution.

### Solution-B

0.25 kg of a 49% sodium hydroxide solution and water were added to 8.7 kg of sodium silicate (JIS No. 3; density, 1.4; Na₂O = 9.5%; SiO₂ = 29%) until the total volume amounted to 8.9 liters. The suspended materials were filtered to obtain a clear solution.

### Solution-C

Water was added to 3.1 kg of a 49% sodium hydroxide solution (density, 1.51) until the total volume amounted to 15.6 liters. The alkalinity of Solution-C was 2.42 N.

### Preparation of aluminosilicate

Solution-C was charged into a reactor, and heated at 40°C while stirring at 350 rpm. Solution-A (about 40°C, 8.9 liters) and Solution-B (about 40°C, 8.9 liters) were added to Solution-C over a period of 1 hour and 40 minutes separately. While Solution-A and Solution-B were being added, the molar ratio of SiO₂/Al₂O₃ was maintained at 3.38 (Si/Al = 6.76). In this example, when mixing of the mixture was finished, the molar ratio of Na₂O/Al₂O₃ was 4.43 and the molar ratio of Na₂O/SiO₂ was 1.31. The resulting slurry was left at 40°C for 5 hours while stirring at 250 rpm to age the amorphous aluminosilicate. After aging, the resulting amorphous aluminosilicate was separated from the solution by centrifugal separator. The resulting aluminosilicate was washed with warm water until the pH of the filtrate amounted to 10.5. After washing, the aluminosilicate was dried at about 100°C, and reduced by Brown grinder to obtain 4.1 kg of dried amorphous aluminosilicate.

During the above synthesizing operation, samples were taken out as shown in Tables 1 and 2; and the following tests were effected.

| | |
|---|---|
| Yield of amorphous aluminosilicate: | 4.1 kg |
| Chemical structure: | 1.10Na₂O·Al₂O₃·2.51SiO₂·xH₂O |
| Average particle size (SEM): | Dav = 0.2 »m |
| True specific gravity: | 1.9 |
| Specific surface area: | 22 m²/g |

**Table 1**

| Alkalinity of solution | |
|---|---|
| Solution-C | 2.42 N |
| When Solution-A and Solution-B were added | 2.47 N |

| aging time | |
|---|---|
| 2 hours | 2.50 N |
| 5 hours | 2.49 N |

**Table 2**

| Molar ratio of solid component and average particle size (Dav) | | | |
|---|---|---|---|
| aging time | molar ratio | | Dav (»m) |
| | Na₂O/Al₂O₃ | SiO₂/Al₂O₃ | |
| 1 hour | 1.07 | 2.47 | 0.2 |
| 2 hours | 1.12 | 2.49 | 0.1 |
| 5 hours | 1.10 | 2.51 | 0.2 |

### Example 2

### Solution-A

To 5.05 kg of aluminum hydroxide [Al(OH)₃·xH₂O, where x is equal to about 3] were added 5.8 kg of 49% sodium hydroxide solution (density, 1.51) and water. The resulting mixture was heated to dissolve the components. Water was added to the mixture until the total volume amounted to 12.9 liters. The suspended materials were filtered to obtain a clear solution.

### Solution-B

0.25 kg of a 49% sodium hydroxide solution and water were added to 11 kg of sodium silicate (JIS No. 3; density, 1.4; Na₂O = 9.5%; SiO₂ = 29%) until the total volume amounted to 14.5 liters. The suspended materials were filtered to obtain a clear solution.

### Solution-C

Water was added to 1.08 kg of a 49% sodium hydroxide solution (density, 1.51) until the total volume amounted to 6.3 liters. The alkalinity of Solution-C was 2.12 N.

### Preparation of aluminosilicate

Solution-C was charged into a reactor, and heated at 35°C while stirring at 450 rpm. Solution-A (about 35°C, 12.9 liters) and Solution-B (about 35°C, 12.9 liters) were added to Solution-C over a period of 70 minutes separately. While Solution-A and Solution-B were being added, the molar ratio of SiO₂/Al₂O₃ was maintained at 1.79 (Si/Al = 3.58). In this example, when mixing of the mixture was finished, the molar ratio of Na₂O/Al₂O₃ was 1.99 and the molar ratio of Na₂O/SiO₂ was 1.11. The resulting slurry was left at 35°C for 3 hours while stirring at 350 rpm to age the amorphous aluminosilicate. After aging, the resulting amorphous aluminosilicate was separated from the solution by centrifugal separator. The resulting aluminosilicate was washed with warm water until the pH of the filtrate amounted to 10.6. After washing, the aluminosilicate was dried at about 100°C, and reduced by Brown grinder to obtain 7.39 kg of dried amorphous aluminosilicate.

During the above synthesizing operation, samples were taken out as shown in Table 3; and the following tests were effected.

| | |
|---|---|
| Yield of amorphous aluminosilicate: | 7.39 kg |
| Chemical structure: | 1.03Na₂O·Al₂O₃·3.24SiO₂·xH₂O |
| Average particle size (SEM): | Dav = 0.2 »m |
| True specific gravity: | 2.0 |
| Specific surface area: | 5.6 m²/g |

**Table 3**

| Alkalinity of solution | |
|---|---|
| Solution-C | 2.16 N |
| When Solution-A and Solution-B were added | 2.29 N |

| aging time | |
|---|---|
| 1 hour | 2.35 N |
| 2 hours | 2.30 N |
| 3 hours | 2.25 N |

The amorphous aluminosilicate obtained in Example 1 contained a small amount of water at 100°C. The value of "x" in the formula was 1.2. the ion exchangeability thereof was 6.9 meq/g (theoretical value). This value was very high. The change in alkalinity during the synthesis was only slight. The alkalinity of the final product was close to that of Solution-C. When the synthesis was effected while suppressing any change in the alkalinity, the molar ratios of Na₂O/Al₂O₃ and SiO₂/Al₂O₃ were kept substantially constant during aging as shown in Table 2.

The aluminosilicate obtained in Example 2 had an ion exchanging ability of 5.7 meq/g (theoretical value). The alkalinity of Solution-C in Example 2 was 2.16 N; and the alkalinity of the slurry during aging was kept within 2.25 - 2.35 N.

### Control Test 1

This control test shows that when the synthesis was effected under the conditions outside those of the present invention, no amorphous aluminosilicate could be obtained.

This control test was effected on one third the scale of Example 2.

### Solution-A

To 1.7 kg of aluminum hydroxide [Al(OH)₃·xH₂O, where x is equal to about 3] were added 1.7 kg of 49% sodium hydroxide solution (density, 1.51) and water. The resulting mixture was heated to dissolve the components. Water was added to the mixture until the total volume amounted to 4.3 liters. The suspended materials were filtered to obtain a clear solution.

### Solution-B

Water was added to 3.7 kg of sodium silicate (JIS No. 3; density, 1.4; Na₂O = 9.5%; SiO₂ = 29%) until the total volume amounted to 4.8 liters. The suspended materials were filtered to obtain a clear solution.

### Solution-C

Water was added to 0.36 kg of a 49% sodium hydroxide solution (density, 1.51) until the total volume amounted to 2.1 liters.

### Preparation of aluminosilicate

The total amounts of Solution-A, Solution-B' and Solution-C were charged into a reactor. The mixture was stirred at 450 rpm. The mixture was heated to 98°C and was left at that temperature while stirring for 4 hours and 35 minutes. After the reaction had finished, the solid component was separated from the mixture by centrifugal separator. The resulting aluminosilicate was washed with warm water, until the pH of the filtrate amounted to 10.6. After washing, the aluminosilicate was dried at about 100°C, and reduced by Brown grinder to obtain 2.32 kg of dried reaction product (crystalline A type zeolite).

The following tests were effected.

| | |
|---|---|
| molar ratio of SiO₂·Al₂O₃: | 1.79 (Si/Al = 3.58) |
| molar ratio of Na₂O/Al₂O₃: | 1.99 |
| molar ratio of Na₂O/Si: | 1.11 |
| Yield of amorphous aluminosilicate: | 2.32 kg |
| Chemical structure: | 1.03Na₂O·Al₂O₃·19.2SiO₂·xH₂O |
| Average particle size (SEM): | Dav = 53 »m |
| True specific gravity: | 2.04 |
| Specific surface area: | 671 m²/g |

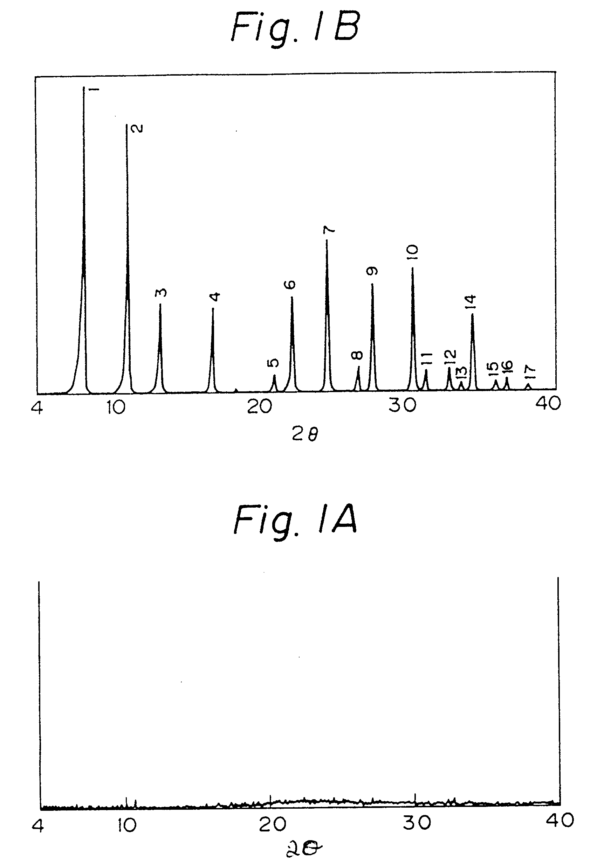

Fig. 1 is X-ray diffraction of the particles (dried at 100 - 110°C) of Example 2 and Control Test 1. Fig. 1-A is X-ray diffraction of the aluminosilicate of Example 2. The Fig. 1-A shows that the aluminosilicate is amorphous. When it is heated at 500°C, it is still amorphous. Fig. 1-B is X-ray diffraction of the zeolite of Control Test 1. Fig. 1-B shows that it is crystalline.

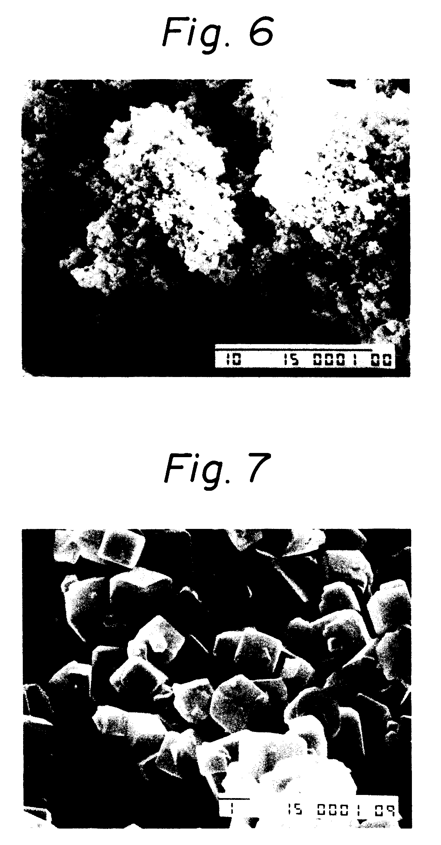

Fig. 6 is electron micrograph of the aluminosilicate of Example 1. It is clear from the micrograph that the aluminosilicate is amorphous. On the other hand, Fig. 7 is electron micrograph of the zeolite of Control Test 1. It is clear from Fig. 7 that the zeolite is crystalline (cubic system) and of A type.

As mentioned above, it is critical that the reaction temperature is less than 55°C. When the reaction is carried out at a temperature of more than 55°C, crystalline material is partially formed. For example, when the reaction is carried out at 98°C as in Control Test 1, the resulting product is completely crystalline.

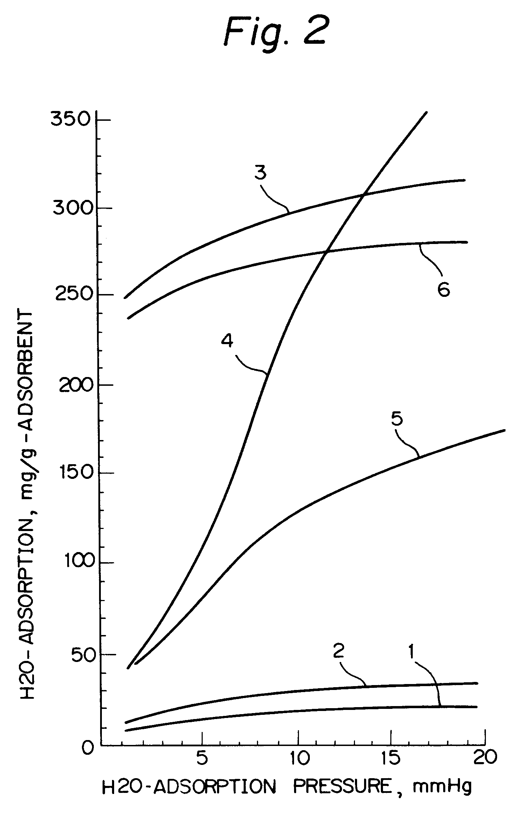

Fig. 2 shows water adsorption isotherm (25°C) of various materials.
Curve 1 ... aluminosilicate of Example 1
Curve 2 ... aluminosilicate of Example 2
Curve 3 ... X type zeolite (Na type)
Curve 4 ... silica gel (SiO₂ gel)
Curve 5 ... alumina gel (Al₂O₃ gel)
Curve 6 ... activated A type zeolite
Adsorbing ability of the aluminosilicates of Examples 1 and 2 is much smaller than that of X type zeolite, silica gel alumina gel and activated A type zeolite. This shows that the present aluminosilicate are useful as a filler for polymers.

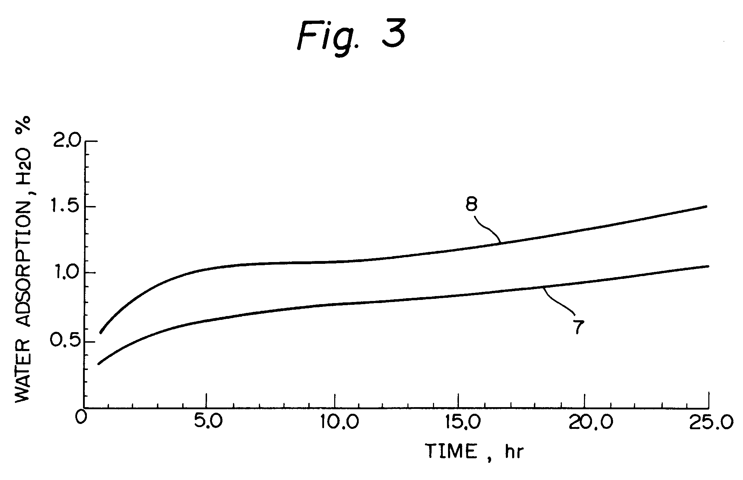

Fig. 3 is a graph showing water absorption with time of the aluminosilicate of Example 2 (curve 7) and Example 1 (curve 8). The water absorption was measured under isothermic (20°C ± 3°C) and at constant humidity (R.H. of 70% ± 5%). Before the water absorption is measured, the samples were heated at 500°C for 1 hour to activate them. Even when 24 hours passed, the water absorption thereof was less than 2%.

### Example 3

This example relates to an ion exchange of the aluminosilicate of Example 2 with ammonium ion.

250 Milliliter of 0.1 M NH₄Cl solution was added to 100 g of the aluminosilicate of Example 2. The mixture was left to stand at room temperature for 3 hours and 40 minutes with stirring at 550 rpm to ion-exchange Na of the aluminosilicate with NH₄ ion. After the ion-exchanging was finished, the solid component was filtered and washed with water until chlorine ion was not eluted. The resulting aluminosilicate was dried for 3 days in a reduced desiccator. Yield of the product was 118 g. The ion exchanging ratio of the resulting NH₄ exchanged aluminosilicate was 0.772 equivalent ratio.

Note: N̅H̅₄̅⁺̅ + N̅a̅⁺̅ = 1 equivalent ratio.

This example shows that majority of Na⁺ ion is ion-exchanged.

### Example 4

This example relates to an ion exchange of the aluminosilicate of Example 2 with Ca⁺⁺ ion.

600 Milliliter of 1.0 M CaCl₂ solution was added to 250 g of the aluminosilicate of Example 2. The mixture was left to stand at room temperature for 6 hours with stirring at 350 rpm to ion-exchange Na of the aluminosilicate with Ca ion. After the ion-exchanging was finished, the solid component was filtered and washed with warm water (60°C) until Ca⁺⁺ ion was not eluted. The resulting aluminosilicate was dried at 100 - 110°C and ground. Yield of the product was 225 g. The ion exchanging ratio of the resulting Ca exchanged aluminosilicate was 0.395 equivalent ratio.

Note: C̅a̅²̅⁺̅ + N̅a̅⁺̅ = 1 equivalent ratio.

This example shows that 39.5% of Na⁺ ion is ion-exchanged.

The amorphous aluminosilicate of the present invention has poor hygroscopicity, can be ground to particle size of 0.01 - 1 »m and good thermal resistance. For example, it is stable at 600°C, so active, anhydrous, fine particles can be obtained by thermal-treating the aluminosilicate at 200 - 600°C. The resulting particles are useful as a filler for paper, fibers, rubbers, synthetic resins, pigments, coating agent, and the like.

### Example 5

This example relates to an ion exchange of the aluminosilicate of Example 2 with K⁺ ion.

250 Milliliter each of 0.5 M KCl solution (Example 5-A), 2.0 M KCl solution (Example 5-B) was added to 100 g of the aluminosilicate of Example 1. The mixtures were left to stand at room temperature for 3 hours 40 minutes with stirring at 450 rpm to ion-exchange Na of the aluminosilicate with K⁺ ion. After the ion-exchanging was finished, the solid component was filtered and washed with warm water (60°C) until Cl ion was not eluted. The resulting aluminosilicate was dried at 100 - 110°C and ground. Yield of the product was 96 g (Example 5-A) and 99 g (Example 5-B). The ion exchanging ratio of the resulting exchanged aluminosilicate was 0.254 equivalent ratio (Example 5-A) and 0.453 equivalent ratio (Example 5-B).

Note: K̅⁺̅ + N̅a̅⁺̅ = 1 equivalent ratio.
The results are shown in Table 4.

**Table 4**

| | Amount of Aluminosilicate | Amount of KCl | Exchanging ratio of K⁺ | Yield |
|---|---|---|---|---|
| Ex. 5-A | 100 g | 0.5 M KCl (250 ml) | 0.254 | 96 g |
| Ex. 5-B | 100 g | 2.0 M KCl (250 ml) | 0.453 | 99 g |

N̅a̅⁺̅ + K̅⁺̅ = 1 equivalent ratio.

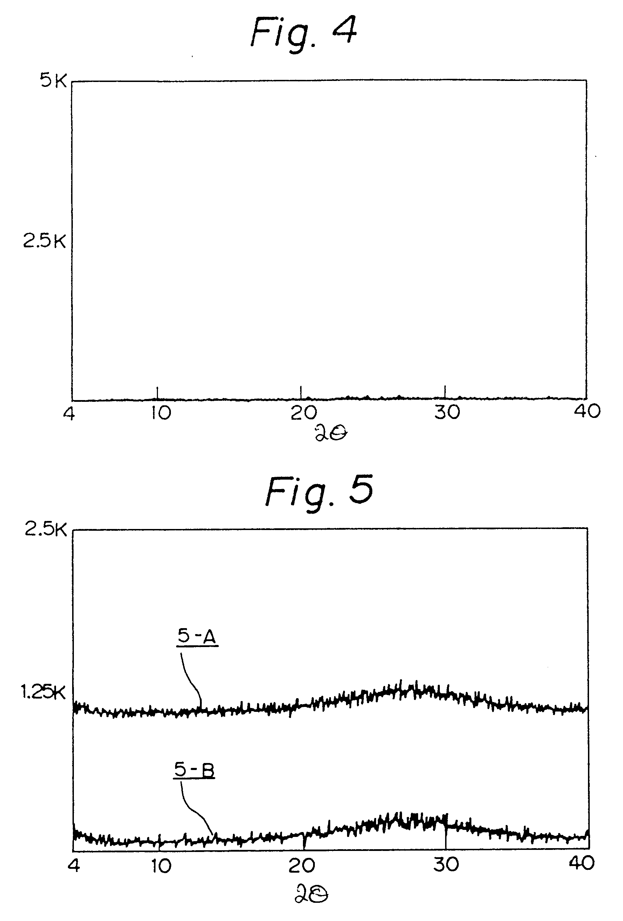

Fig. 4 is X-ray diffraction pattern of the product of Example 4.

Fig. 5 is X-ray diffraction pattern of the products of Example 5.

Figs. 4 and 5 exhibit that the products of Examples 4 and 5 are amorphous.

### Production Example 1 (AMAS)

This example relates to the production of an AMAS having a molar ratio of SiO₂/Al₂O₃ ≃ 2.5.

### Solution-A

1.73 kg of 49% sodium hydroxide solution (specific gravity = 1.51) and water were added to 1.06 kg of aluminum hydroxide [Al(OH)₃·xH₂O; x ≃ 3], and the resultant mixture was heated to obtain a solution. Then, water was further added to this solution so that the whole quantity of the solution was eventually 4.5 ℓ. A trace amount of suspended matter in the solution was filtered out to prepare a transparent solution (Solution-A).

### Solution-B

0.13 kg of 49% sodium hydroxide solution (specific gravity = 1.51) and water were added to 4.4 kg of sodium silicate (JIS - No. 3); specific gravity = 1.4; Na₂O = 9.5%; SiO₂ = 29%) so that the whole quantity of the mixture was 4.5 ℓ. A trace amount of suspended matter in this solution was filtered out to prepare a transparent solution (Solution-B).

### Solution-C

Water was added to 1.6 kg of 49% sodium hydroxide solution (specific gravity = 1.51) so that the whole quantity of the mixture was 7.8 ℓ (Solution-C).

Solution-C was placed in a reaction tank and maintained under stirring at 350 rpm while being heated at 38°C ± 2°C. After Solution-A and Solution-B had been maintained at around 40°C, they were simultaneously but individually poured into the reaction tank containing Solution-C in such a manner that the pouring of the solutions was completed in 55 minutes. After the completion of the mixing of the material solutions, the slurry-containing liquid was maintained for four hours under stirring at 270 rpm at about 40°C to mature the prepared AMAS. After the completion of the maturing, the AMAS was filtered by means of centrifugal separation and then rinsed with hot water. This rinsing was effected until the pH of the filtrate reached 10.6. After completion of the rinsing, the AMAS was dried at 100°C to 110°C and then pulverized to obtain about 1.99 kg of a dried AMAS fine powder as a final product.

### Analysis of Production Example 1:

| | |
|---|---|
| Yield of dried AMAS fine powder: | about 1.99 kg |
| Chemical composition: | 1.10Na₂O·Al₂O₃·2.51SiO₂·xH₂O |
| Dav: | 0.2 »m |
| SSA: | 22 m²/g |

### Production Example 2(AMAS)

This example relates to the production of an AMAS having a molar ratio of SiO₂/Al₂O₃ ≃ 3.2.

### Solution-A

2.9 kg of 49% sodium hydroxide solution (specific gravity = 1.51) and water were added to 2.53 kg of aluminum hydroxide [Al(OH)₃·xH₂O; x ≃ 3], and the resultant mixture was heated to obtain a solution. Water was further added to this solution so that the whole quantity of the mixture was eventually 6.5 ℓ. A trace amount of suspended matter in the solution was filtered out to prepare a transparent solution (Solution-A).

### Solution-B

Water was added to 5.5 kg of sodium silicate solution (JIS-No.3; specific gravity = 1.4; Na₂O = 9.5%; SiO₂ = 29%) so that the whole quantity of the mixture was eventually 7.3 ℓ. A trace amount of suspended matter in the solution was filtered out to prepare a transparent solution (Solution-B).

### Solution-C

0.54 kg of 49% sodium hydroxide solution (specific gravity = 1.51) was diluted with water so that the whole quantity of the solution was 3.2 ℓ (Solution-C).

Solution-C was placed in a reaction tank and maintained under stirring at 500 rpm while being heated at about 35°C. Solution-A and Solution-B which had been heated at about 35°C were simultaneously but individually poured into the reaction tank containing Solution-C in such a manner that the pouring of these solutions was completed in one hour. After completion of the mixing of the material solutions, the slurry-containing liquid was maintained for four hours under stirring at 350 rpm at about 35°C, and the prepared AMAS was then filtered by means of centrifugal separation. The AMAS was rinsed with hot water in a manner similar to that in the above-described example. The rinsed AMAS was then dried at 100 to 110°C and pulverized to obtain about 3.7 kg of a dried AMAS fine powder as a final product.

### Analysis of Production Example 2:

| | |
|---|---|
| Yield of dried AMAS fine powder: | about 3.7 kg |
| Chemical composition: | 1.03Na₂O·Al₂O₃·3.24SiO₂·xH₂O |
| Dav: | 0.2 »m |
| SSA: | 56 m²/g |

### Production Example 3 (AMAS)

This example relates to the production of an AMAS material which is required in preparation of an antibacterial and bactericidal amorphous aluminosilicate composition according to the present invention having a molar ratio of SiO₂/Al₂O₃ ≃ 6.

### Solution-A

3.6 kg of 49% sodium hydroxide solution (specific gravity = 1.51) and water were added to 1.37 kg of aluminum hydroxide [Al(OH)₃·xH₂O; x ≃ 3], and the resultant mixture was heated to obtain a solution. Water was further added to this solution so that the whole quantity of the solution was 3.6 ℓ. A trace amount of suspended matter in the solution was filtered out to prepare a transparent solution (Solution-A).

### Solution-B

Water was added to 12.5 kg colloidal silica (trade name: Snowtex-30) so that the whole quantity of the solution was 10.8 ℓ. A trace amount of suspended matter in the solution was filtered out to prepare a transparent solution (Solution-B).

### Solution-C

Water was added to 14.9 kg of 49% sodium hydroxide solution (specific gravity = 1.51) so, that the whole quantity of the solution was 7.2 ℓ (Solution-C).

Solution-C was placed in a reaction tank and maintained under stirring at 300 rpm while maintaining the temperature of Solution-C at 30°C. Solution-A and Solution-B which had been maintained at about 30°C were simultaneously but individually poured into the reaction tank containing Solution-C in such a manner that the pouring of these solutions was completed in 45 minutes. After completion of the mixing of the material solutions, the slurry-containing liquid was maintained for 2 hours and 50 minutes under stirring at 400 rpm and at about 30°C to mature AMAS, and the prepared AMAS was then filtered by means of centrifugal separation. The resultant solid phase was rinsed with hot water (until the pH of the filtrate reached 10.8) in a manner similar to that in the above-described production example. The rinsed AMAS was then dried at 100 to 110°C and subsequently pulverized to obtain 4.08 kg of a dried AMAS fine powder as a final product.

### Analysis of Production Example 3:

| | |
|---|---|
| Yield of dried AMAS fine powder: | 4.08 kg |
| Chemical composition: | 1.42Na₂O·Al₂O₃·6.04SiO₂·xH₂O |
| Dav: | 0.2 »m or less |
| SSA: | 139 m²/g |

The AMAS's which are employed as materials for the present invention and which are respectively obtained in accordance with the above-described Production Examples 1 to 3 are amorphous and porous, and are fine powders each having SSA of 20 m²/g or more and Dav of 1 »m or less. The respective chemical compositions of the AMAS's obtained by Production Examples 1 to 3 are such as those described above, and all the AMAS's have an advantageous and sufficient exchange capacity to prepare an antibacterial composition according to the present invention. In addition, exchangeable ions (Na⁺) of the above-described materials and antibacterial metal ions are exchanged at extremely high speed, and AMAS as a parent body and antibacterial metal ions are joined together with extremely high bonding strength.

The following is a description of examples which relate to the process for preparing AMAS compositions having antibacterial and bactericidal actions according to the present invention.

### Example 6

This example relates to the process for preparing an Ag-AMAS composition (SiO₂/Al₂O₃ = 2.51) according to the present invention which contains silver. About 250 g of the dried AMAS powder (1.10Na₂O·Al₂O₃·2.51SiO₂·xH₂O) produced in the above-described Production Example 1 was collected, and 500 ml of any one of the solutions of the 0.05 M AgNO₃ (Example 6-A), 0.3 M AgNO₃ (Example 6-B) and 0.6 M AgNO₃ (Example 6-C) was added to the above-described AMAS powder. The resultant mixture was maintained for 5 hours under stirring at 350 rpm and at room temperature, whereby some of the exchangeable Na⁺ in the AMAS were exchanged for Ag⁺. After the completion of this ion exchange reaction, the Ag-AMAS was filtered, and the resultant solid phase was rinsed to remove any excessive Ag⁺ present in the solid phase. The rinsed Ag-AMAS was then dried at 100 to 110°C and subsequently pulverized to obtain a dried Ag-AMAS fine powder. The results of this example are shown in Table 5 below.

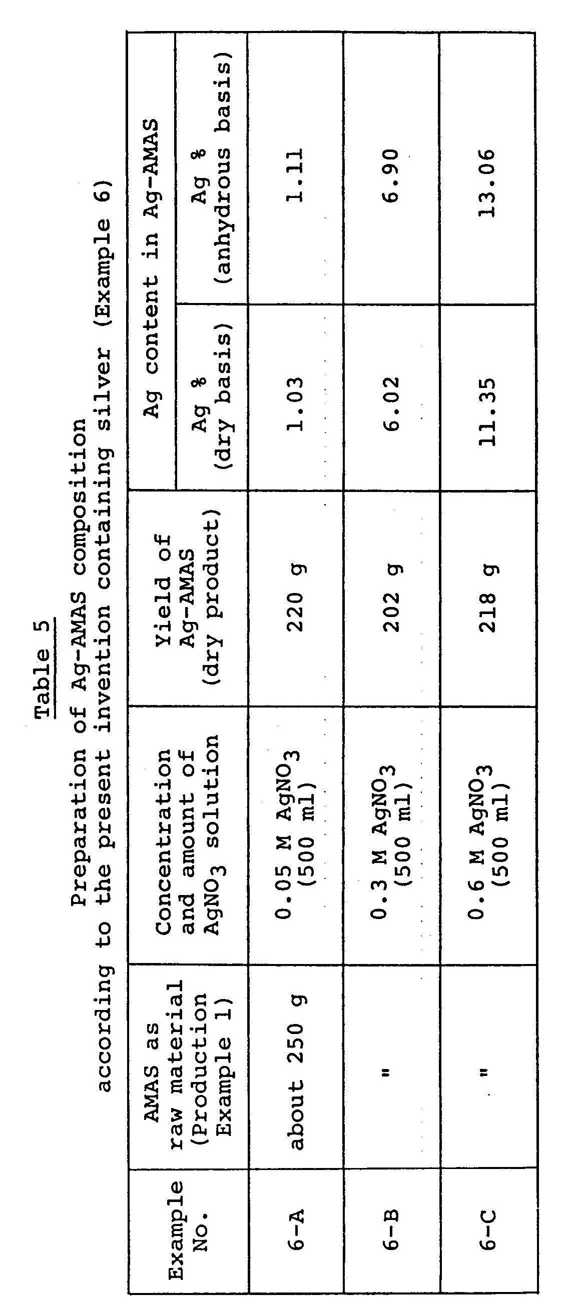

### Example 7

This example relates to the preparation of a Cu-AMAS composition (SiO₂/Al₂O₃ = 3.24) according to the present invention which contains copper. About 100 g (Example 7-A) or about 250 g (Example 7-B) of the dried AMAS powder (1.03Na₂O·Al₂O₃·3.24SiO₂·xH₂O) produced in the above-described Production Example 2 was collected, and 500 ml of 0.02 M Cu(NO₃)₂ solution was added to the former AMAS, or 500 ml of 0.6M Cu(NO₃)₂ solution was added to the latter AMAS. The former or latter solution was further diluted with water and maintained as shown in Table 6. The resultant mixture was then maintained for 6 hours under stirring at 360 rpm, whereby some of the exchangeable Na⁺ in the AMAS was exchanged for Cu²⁺ (ion exchange at ordinary temperature). After the completion of the ion exchange operation, the Cu-AMAS was filtered, and the resultant solid phase was rinsed to remove any excessive Cu²⁺ present in the solid phase. The rinsed Cu-AMAS was then dried at 100 to 110°C and subsequently pulverized to obtain a dried Cu-AMAS fine powder.

The results of this example are shown in Table 6 below. The Cu-AMAS's obtained in this example had an average particle diameter (Dav) of 0.2 »m, while the specific surface area (SSA) of Example 7-A was 56 m²/g, and SSA of Example 7-B was 59 m²/g.

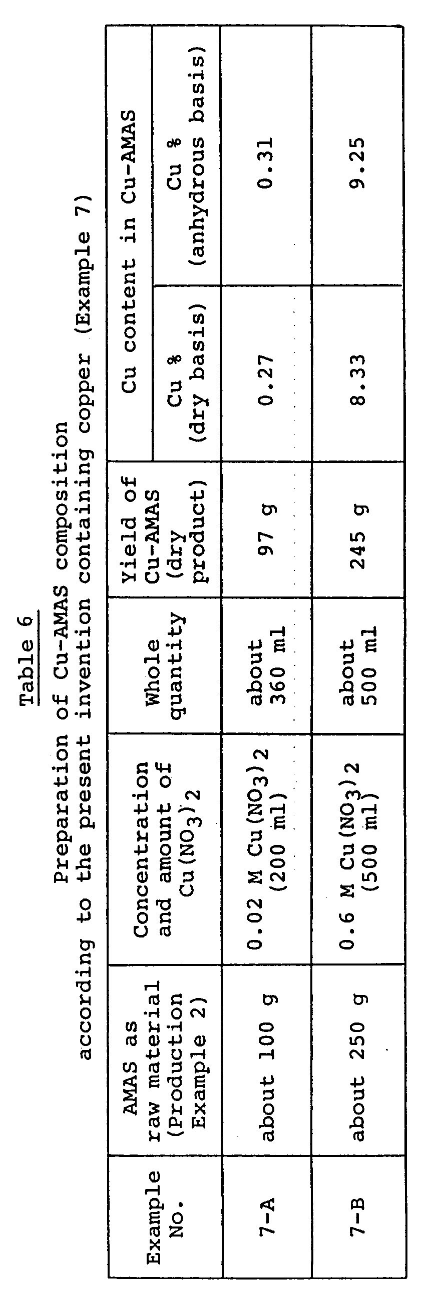

### Example 8

This example relates to preparation of a Zn-AMAS composition (SiO₂/Al₂O₃ = 6.04) according to the present invention which contains zinc. About 250 g of the dried AMAS powder (1.42Na₂O·Al₂O₃·6.04SiO₂·xH₂O) produced in the above-described Production Example 3 was collected, and 500 ml of either 0.1 M Zn(NO₃)₂ (Example 8-A) or 1.0 M Zn(NO₃)₂ (Example 8-B) was added to the AMAS. The resultant mixture was maintained for 7 hours under stirring at 400 rpm, whereby some of the exchangeable Na⁺ in the AMAS was exchanged for Zn²⁺ (ion exchange at ordinary temperature). The produced Zn-AMAS was then filtered, and the resultant solid phase was rinsed to remove any excessive Zn²⁺ present in the solid phase. The rinsed Zn-AMAS was dried at 100 to 110°C and pulverized to obtain a dried Zn-AMAS fine powder.

The results of this example are shown in Table 7 below. All the Zn-AMAS's obtained in this example had an average particle diameter (Dav) of 0.6 »m, while they had substantially the same specific surface area, that is, Example 8-A had SSA of 140 m²/g, and Example 8-B had SSA of 141 m²/g.

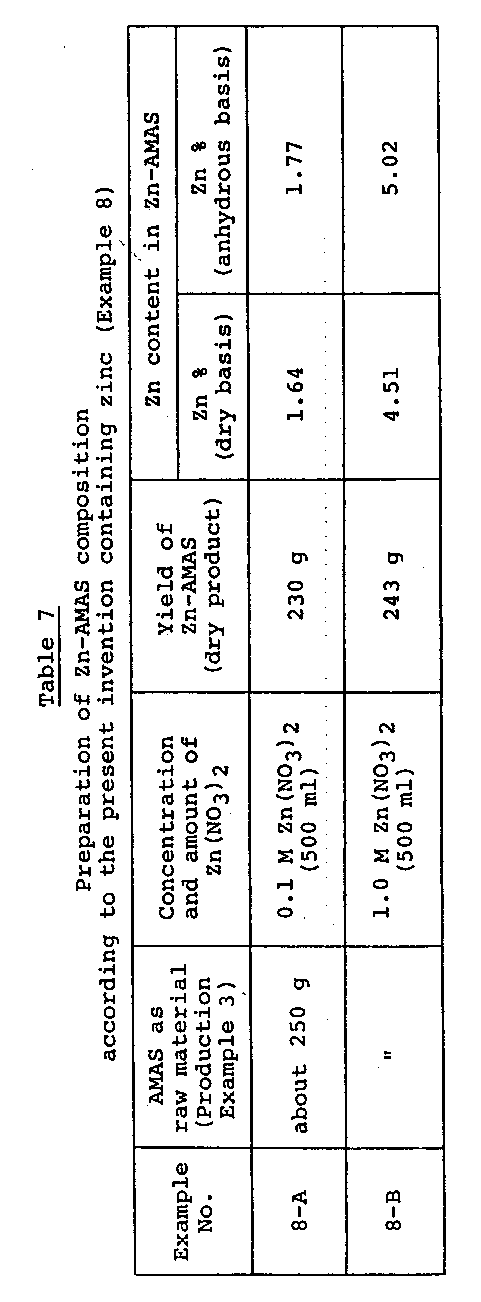

### Examples 9 to 14

Examples 9 to 14 respectively show preparation examples for Bi-AMAS (Dav = 0.1 »m), Cr-AMAS (Dav = 0.1 »m), Sn-AMAS (Dav = 0.2 »m), Hg-AMAS (Dav = 0.2 »m), Pb-AMAS (Dav = 0.4 »m) and Cd-AMAS (Dav = 0.2 »m) (see Table 8).

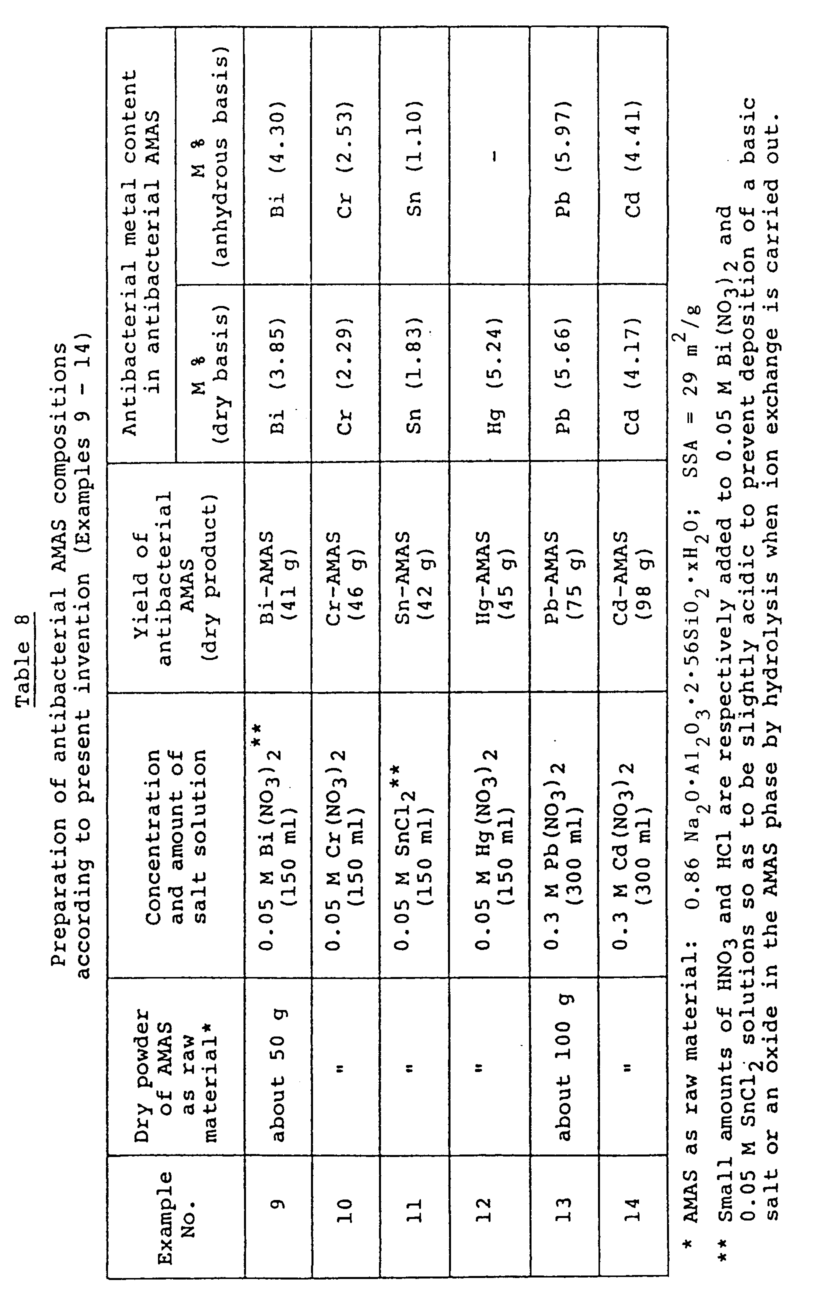

As starting materials, dried products of AMAS's with SSA of 29 m²/g which had the respective compositions shown in Table 8 were employed. In each of Examples 9 to 12, about 50 g of AMAS and 150 ml of 0.05 M salt solution were used, and each mixture was maintained for 4 hours and 20 minutes under stirring at 360 rpm, whereby some of Na⁺ of each AMAS were replaced by antibacterial metal ions such as those shown in Table 8 (ion exchange at ordinary temperature), thus obtaining an AMAS composition having both antibacterial and bactericidal actions. Rinsing and drying of the M-AMAS's shown in Table 8 were carried out in the same way as that in the above-described examples.

All the antibacterial M-AMAS's obtained in Examples 9 to 14 had a satisfactorily small average particle diameter and a specific surface area of 30 m²/g or more. In addition, all of these antibacterial AMAS compositions are porous and only slightly soluble in water. The antibacterial metal ions (M), i.e., Bi²⁺^{,} Cr³⁺^{,} Sn²⁺, Hg²⁺, Pb²⁺ and Cd²⁺, are stably bonded and fixed to the AMAS's as parent bodies specified by the present invention, and therefore only slightly liquefy out of the solid phase. Accordingly these antibacterial AMAS compositions exhibit extremely high stability. Since dissociation of these M-AMAS compositions progresses in desirable condition, the bactericidal action against bacteria or fungi which results from the dissociation powerfully takes place around an active point on the M-AMAS which serves as a parent body. In consequence, it has been confirmed that the M-AMAS compositions according to the present invention offer advantages which are not found in known bactericidal agents (see the antibacterial power evaluation test described below).

In order to evaluate the antibacterial power against bacteria and fungi of a typical antibacterial and bactericidal amorphous aluminosilicate composition according to the present invention, an evaluation test of antibacterial power, measurement of death rate, and a fungal resistance test were carried out. Evaluation of antibacterial power was made by the following method.

### Method

A suspension of a test substance was prepared at a concentration of 100 mg/ml, and a disk was impregnated with this suspension.

As to the culture media, Mueller Hinton media were employed for bacteria, while Sabouraud agar media were used for fungi.

Each of the test bacteria or fungi was suspended in physiological saline at a concentration of 10⁸ individuals per ml, and 0.1 ml of this suspension was dispersed in a culture medium by means of a Conradi bar.

Then, a test disk was stuck on this culture medium.

### Judgement

As to bacteria, the test disk was maintained in the above-described state for 18 hours at 37°C, and observation was then made so as whether or not an inhibition zone was formed on the disk. As to fungi, judgement was made after 1 week had elapsed with the temperature maintained at 30°C.

The measurement of the death rate was carried out by the following method.

One milliliter of a suspension of spores of each of the test bacteria or fungi (10⁴ individuals per milliliter) was added into and mixed with 9 ml of a suspension of a test substance (500 mg/ml), and the mixture was maintained for 24 hours at 30°C to cause a reaction. Then, 0.1 ml of the mixture was dispersed into a Sabouraud agar medium, and this was maintained for 48 hours at 30°C. Then, the number of individuals surviving was measured to obtain the death rate.

The results of the antibacterial power evaluation test carried out on each of the Ag-AMAS's according to the present invention which contain silver are shown in Table 9 below. The Ag-AMAS [Ag = 1.03% (on a dry basis)] obtained in Example 6-A formed an excellent inhibition zone against all of the test bacteria shown in Table 9, and it is consequently confirmed that it has superior antibacterial power. It has also been found that two types of Ag-AMAS's [Ag = 0.22% and Ag = 0.02% (on a dry basis) prepared using the same type of AMAS material as that for the above-described example but having a silver content lower than that of said example also possess an excellent antibacterial power as shown in Table 9. Antibacterial power evaluation tests were carried out under the same testing conditions for the purpose of making comparison as to the antibacterial power between the Ag-AMAS compositions according to the present invention and a known silver fine powder (metal) (see Control Test 2 in Table 9). In Control Test 2, a 325-mesh fine powder (marketed product) was used as a metallic silver in an extremely large amount as compared with the silver content in the Ag-AMAS's, but no inhibition zone was formed against any of the three types of bacteria shown in Table 9. Accordingly, it is clear that the effectiveness of this Control Test 2 is much inferior to that of any of the antibacterial compositions according to the present invention.

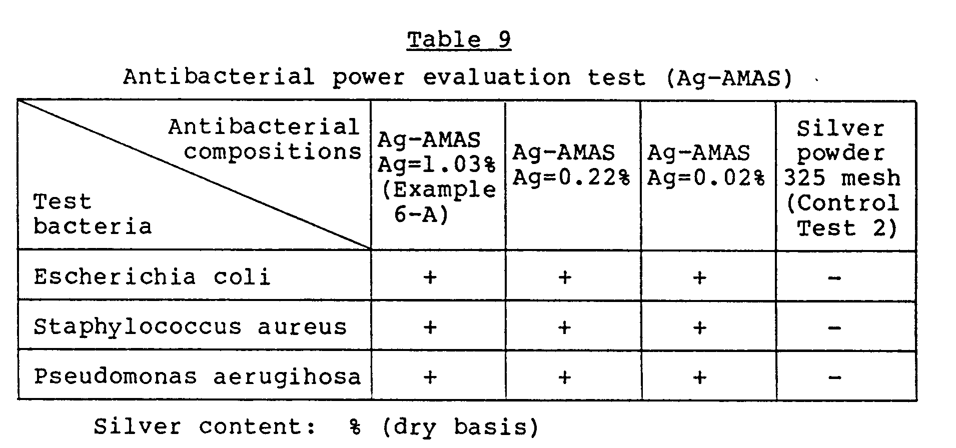

Measurement of the death rate of each of the following test fungi, i.e., Aspergillus flavus, Aspergillus niger and Trichophyton mentagrophytes, was carried out with respect to the Ag-AMAS compositions according to the present invention, and excellent results were obtained (see Table 10). Measurement of the death rate was carried out with respect to Ag-AMAS compositions (each including the same AMAS as a material as that for Example 6-A) respectively containing 0.02%, 0.047% and 0.22% of Ag, and it was found that the death rate of Aspergillus niger was 100% for all the Ag-AMAS compositions. The death rate of Aspergillus flavus was 99% for the Ag-AMAS containing 0.02% of Ag and 100% for both the Ag-AMAS's respectively containing 0.047% and 0.22% of Ag. The Ag-AMAS (Ag = 0.22%) also showed a death rate of 100% with respect to Trichophyton mentagrophytes, and it is consequently confirmed that it has an excellent bactericidal power. The measurement of the death rate of Aspergillus flavus was carried out under the same testing conditions for the purpose of making comparison as to the bacterial power between the antibacterial compositions according to the present invention and a known silver (metal) (see Control Test 3 in Table 10). Although Control Test 3 employed an extremely large amount of a 325-mesh silver fine powder (marketed product) as compared with the silver content in the above-described Ag-AMAS compositions, it showed a death rate of 0%. It is also clear from the comparison with Control Test 3 that the antibacterial compositions according to the present invention exhibit an antibacterial power superior to that of the known antibacterial agents.

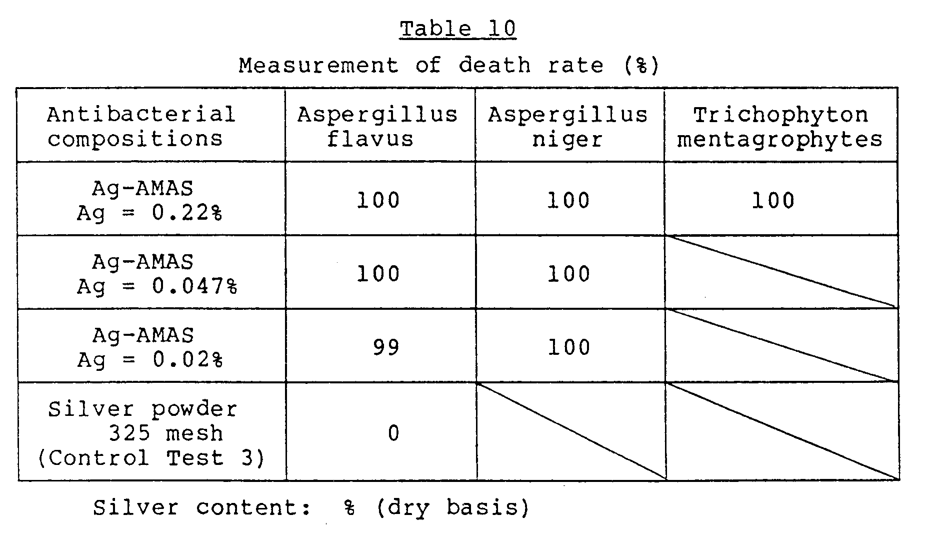

Next, the death rate of each of Aspergillus flavus and Aspergillus niger was measured using a Cu-AMAS [Cu = 0.27% (on a dry basis); Example 7-A] containing copper. The results were 90% for the former and 57% for the latter (see Table 11). Then, the death rate of each of Aspergillus flavus and Aspergillus niger was measured using a Cu-AMAS [Cu = 0.064% (on a dry basis); the same AMAS material as that employed to prepare Example 7-A] having a copper content lower than the above, and the results were 90% for the former and 57% for the latter. These results also confirm that even a Cu-AMAS according to the present invention which has a relatively low copper content is effective.

The death rate of a fungus, Aspergillus niger, was also measured with respect to the Zn-AMAS's according to the present invention which contain zinc, and it was confirmed that a death rate of 17% is obtained by a Zn-AMAS [Zn = 1.64% (on a dry basis); Example 8-A], while a death rate of 39% is obtained by a Zn-AMAS [Zn = 7.26% (on a dry basis); the same AMAS material as that employed to prepare Example 8-A] having a zinc content higher than the above.

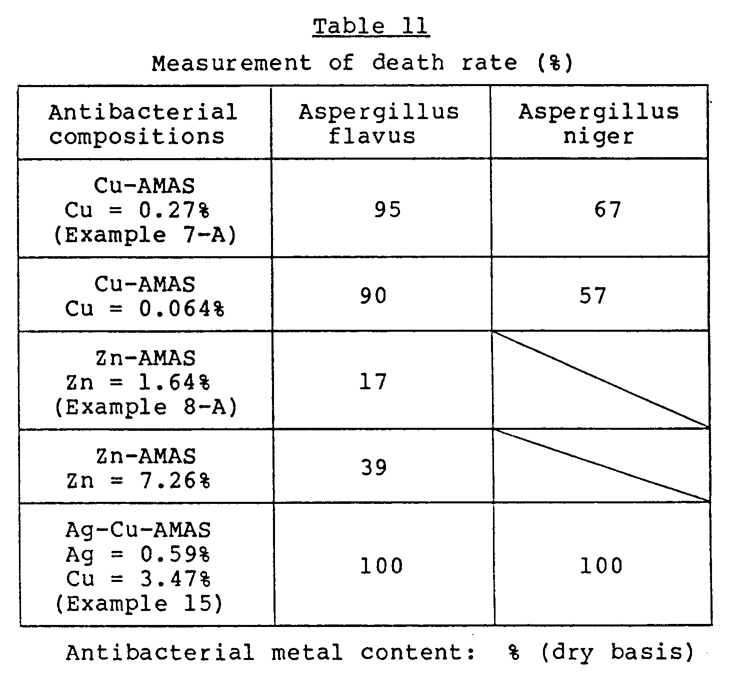

Example 15 (see Table 11) relates to a compounded antibacterial composition according to the present invention. In this example, the death rate of each of the fungi, Aspergillus flavus and Aspergillus niger, was measured using an Ag-Cu-AMAS containing copper and silver [Ag = 0.59%; Cu = 3.47% (on a dry basis): using as a raw material an AMAS of 1.03Na₂O·Al₂O₃·3.24SiO₂·xH₂O obtained in accordance with Production Example 2]. The results were 100% for both the fungi. When two different kinds of metal are compounded together and stably held on one of the AMAS's specified in the present invention as in the case of this example, a bactericidal action takes place in an even more preferable condition on the basis of the synergistic effect.

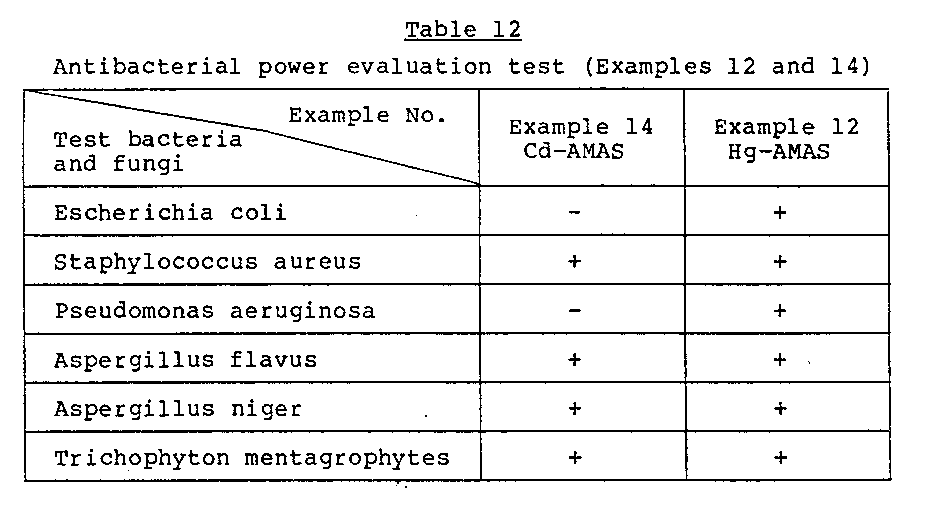

Tables 12 and 13 show the results of the antibacterial power test carried out on the antibacterial AMAS compositions according to the present invention prepared in Examples 9 to 14 (see Table 8). As will be understood from Table 12, when the Cd-AMAS (Example 14) was used, an excellent inhibition zone was formed against the four types of bacteria and fungi other than Escherichia coli and Pseudomonas aeruginosa, whereas, when the Hg-AMAS (Example 12) was used, an excellent inhibition zone was formed against all the six types of bacteria and fungi. It was thus found that these antibacterial AMAS compositions have excellent antibacterial power. Further, the death rate of each of the three types of fungi shown in Table 13 was measured using the antibacterial compositions obtained in Examples 9 to 14 (see Table 13). It is clear from these results that Bi-AMAS, Cu-AMAS, Sn-AMAS, Hg-AMAS, Pb-AMAS and Cd-AMAS have antibacterial power. The bond between an antibacterial metal and a specified AMAS as a parent body in each of the above-described antibacterial compositions is also chemically stable, and these compositions are only slightly soluble in water. Eluation of the antibacterial metal from the parent body in each composition is only in units of ppb, which is preferable from the viewpoint of stability.

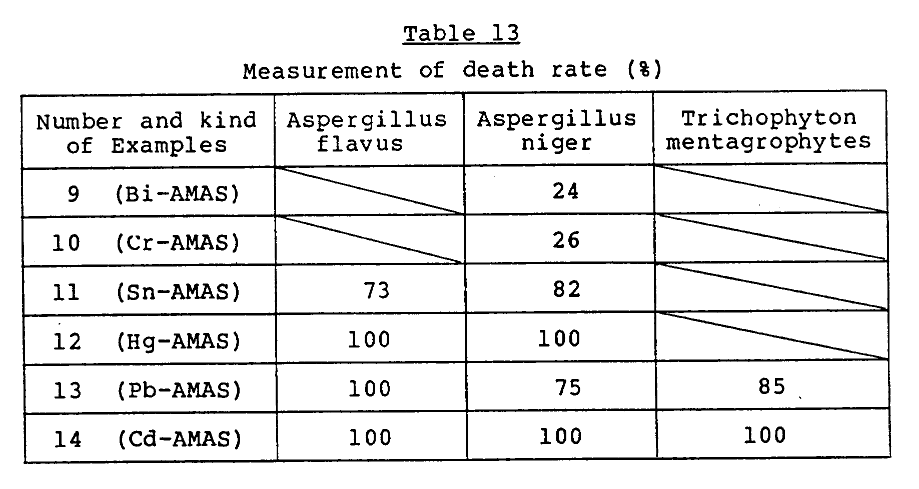

The antibacterial and bactericidal AMAS compositions according to the present invention which are constituted by fine particles can readily be dried. More specifically, when they are heated at a temperature region, e.g., from 200 to 500°C, the water therein is readily removed so that the water content is lower than 1% or substantially 0. Since fine particles (Dav: 5 »m or less) activated in this state are effectively dispersed into a polymeric material, they are suitably employed as an antibacterial filler. The activated antibacterial fine particles according to the present invention may be applicable to the fields of paper, fiber, plastics, rubber, pigment, coating, etc.

### Example 16

This example relates to a practical example in which the present invention is utilized as an antibacterial filler. The antibacterial Ag-Cu-AMAS composition [Ag = 0.59%; Cu = 3.47% (on a dry basis)] shown in Example 15 (see Table 11) was heated for 1 hour and 25 minutes at 300°C so as to be activated and then pulverized to obtain fine particles having an average particle diameter (Dav) of 0.3 »m. 2% of the thus obtained fine particles were added to a polyethylene chip (L.D.P.E.), and the mixture was intimately mixed for 20 minutes at about 185°C. The resultant intimate mixture was then pressurized under a load of 45 kg/cm² so as to be shaped into a plate of 0.8 mm thickness.

The plate was cut to prepare a test specimen (70 x 70 mm), and a fungal resistance test was carried out through ASTM-G21 using this test specimen. As test fungi, the following five types of fungi were employed: Aspergillus niger (ATCC 9642), Penicilium Funiculosum (ATCC 9644), Chaetomium globosum (ATCC 6205), Trichoderma Sp (ATCC 9645) and Aurebasidium Pullulans (ATCC 9348), and spores of these fungi were inoculated. A culture medium having the following composition was employed.

### Culture medium:

K₂HPO₄ (0.7 g); KH₂PO₄ (0.7 g); MgSO₄·7H₂O (0.7 g); NH₄NO₃ (1.0 g); NaCl (0.005 g); FeSO₄·7H₂O (0.002 g); ZnSO₄·7H₂O (0.002 g); MnSO₄·7H₂O (0.001 g); Agar (15 g); and pure water (1,000 ml).

Cultivation was effected for 40 days at a temperature of 25°C ± 2°C and a relative humidity of 90% ± 5%. The results of the test are shown in Table 14 below.

**Table 14**

| Fungal resistance test | | |
|---|---|---|
| Test specimen (plate) | Evaluation mark | Remarks |
| Example 16 | 0 | No fungi grow |
| Control Test 4 | 2 | 10-30% of fungi grow |

In Example 8, a plate of 0.8 mm thickness (70 x 70 mm: no Ag-Cu-AMAS added) was prepared using the same polyethylene chip (L.D.P.E.) as that employed in Example 16 and subjected to a blank test. From the comparison between Examples 16 and 8 also, it is clear that the antibacterial amorphous aluminosilicates according to the present invention have remarkably high resistance against fungi.

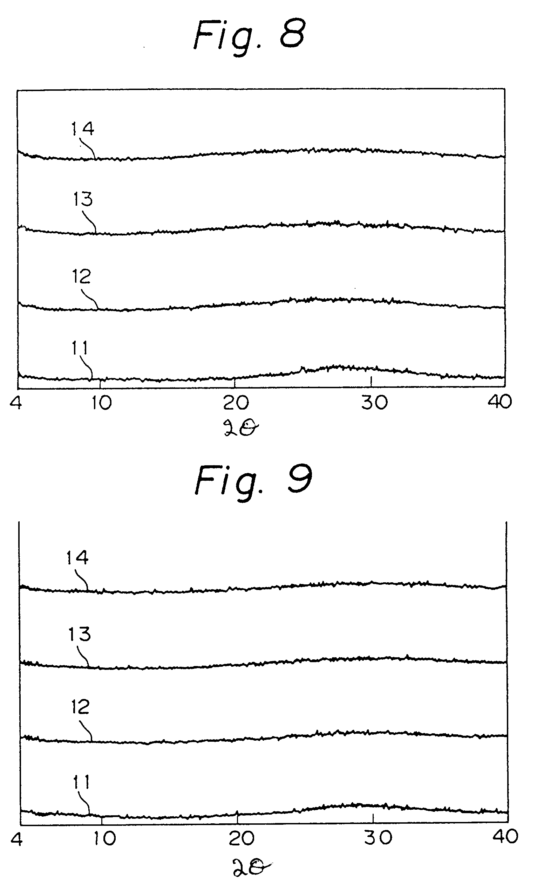

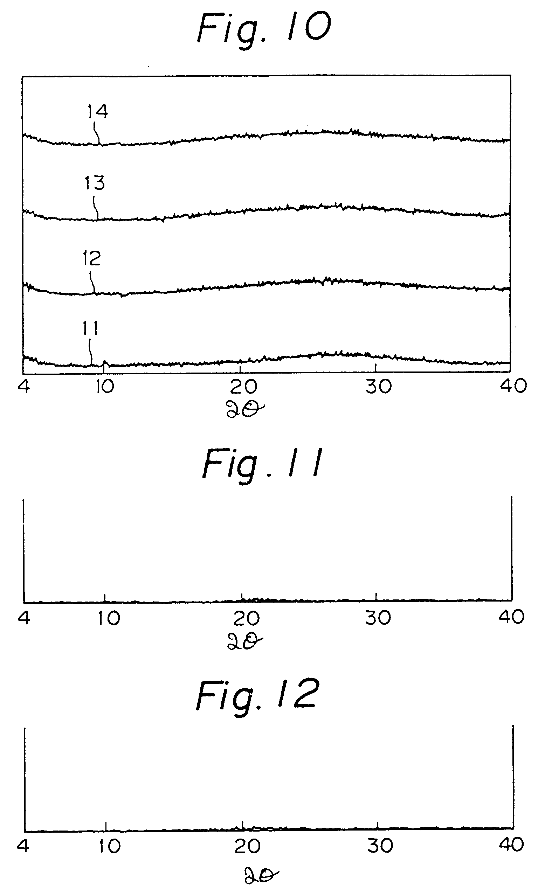

The antibacterial and bactericidal aluminosilicates according to the present invention are amorphous as has already been described. The X-ray diffraction patterns of typical examples of the present invention are shown in Figs. 8 to 12. Fig. 8 shows X-ray diffraction patterns of the Ag-AMAS [Ag = 1.03% (on a dry basis)] obtained in Example 6-A. The reference numeral 11 in the figure represents the X-ray diffraction patterns of a dry powder of the Ag-AMAS, while the numerals 12, 13 and 14 respectively represent sintered products of the Ag-AMAS obtained at 350°C, 450°C and 550°C. It may also be understood from these patterns that the products of the present invention are amorphous and have high heat-resistance. Fig. 9 shows X-ray diffraction patterns of the Ag-AMAS [Ag = 11.35% (on a dry basis)] with a relatively high silver content which is obtained in Example 6-C. The reference numeral 11 in the figure represents the diffraction pattern of a dry powder of the Ag-AMAS, while the numerals 12, 13 and 14 respectively represent the diffraction pattern of sintered products of the Ag-AMAS obtained at 350°C, 450°C and 555°C. Any of the dry and sintered products of the Ag-AMAS is amorphous. Fig. 10 shows X-ray diffraction patterns of the Cu-AMAS [Cu = 0.27% (on a dry basis)] obtained in Example 7-A. The reference numeral 11 in the figure represents the diffraction pattern of a dry product of the Cu-AMAS, while the numeral 12, 13 and 14 respectively represent the diffraction patterns of sintered products of the Cu-AMAS obtained at 350°C, 450°C and 550°C. It may be understood that any of the dry and sintered products is amorphous. Figs. 11 and 12 respectively show the X-ray diffraction patterns of dry powders of the Zn-AMAS [Zn = 1.64% (on a dry basis)] obtained in Example 8-A and the Zn-AMAS [Zn = 4.51% (on a dry basis)] obtained in Example 8-B. Both the antibacterial compositions are completely amorphous.

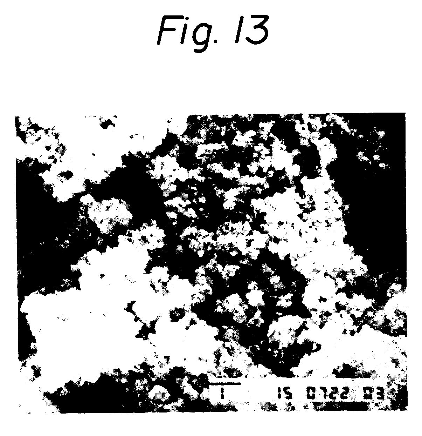

Fig. 13 (full scale; 1 »m) is an electron microscopic photograph of the Cu-AMAS obtained in Example 7-A, which clearly shows that the Cu-AMAS is amorphous.

### Control Test 2

This example relates to production of an amorphous aluminosilicate. In this example, the following solutions were employed as material solutions.

### Solution-A

5.8 kg of 49% sodium hydroxide solution (specific gravity = 1.51) and water were added to 5.05 kg of aluminum hydroxide [Al(OH)₃·xH₂O; x ≃ 3], and the resultant mixture was heated to obtain a solution. Water was further added to this solution so that the whole quantity of the solution was eventually 12.9 ℓ. A trace amount of suspended matter in the solution was filtered out to prepare a transparent solution.

### Solution-B

Water was added to 11 kg of sodium silicate solution (JIS-No. 3; specific gravity = 1.4; Na₂O = 9.5%; SiO₂ = 29%) so that the whole quantity of the mixture was 14.5 ℓ. A trace amount of suspended matter in this mixture was filtered out to prepare a transparent solution.

### Solution-C

Water was added to 1.08 kg of 49% sodium hydroxide solution (specific gravity = 1.51) so that the whole quantity of the mixture was 6.3 ℓ (the alkalinity of Solution-C = 2.16 N). Solution-C (6.3 ℓ) was placed in a reaction tank and maintained under stirring at 450 rpm while being heated at about 35°C. Solution-A (about 35°C; 12.9 ℓ) and Solution-B (about 35°C; 14.5 ℓ) were individually poured into the reaction tank containing Solution-C in such a manner that the pouring of these solutions was completed in 70 minutes. During the addition of Solution-A and -B into Solution-C, the molar ratio of SiO₂/Al₂O₃ in the resulting mixture was maintained at 1.79 (Si/Al = 3.58) throughout from the start to the completion of the pouring operation. In this example, the molar ratio of Na₂O/Al₂O₃ and that of Na₂O/SiO₂ upon completion of the mixing of the material solutions were 1.99 and 1.11, respectively. After completion of the mixing operation, the slurry-containing liquid was maintained for 3 hours under stirring at 350 rpm and at about 35°C to produce an amorphous aluminosilicate, which was then filtered by means of centrifugal separation. The aluminosilicate was rinsed with hot water. In this case, rinsing was carried out until the pH of the filtrate reached 10.6. After the completion of rinsing, the amorphous aluminosilicate was dried at about 100°C and then pulverized by a Braun pulverizer to obtain 7.39 kg of a dried fine powder of the amorphous aluminosilicate as a final product.

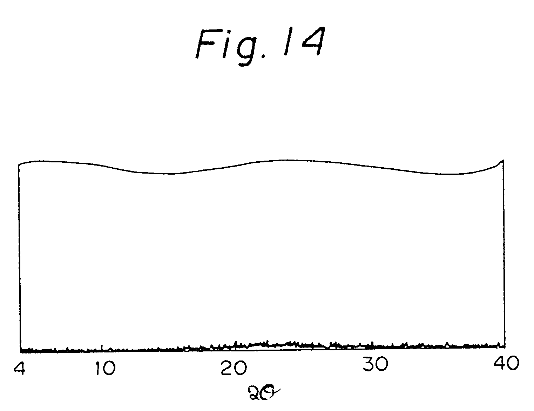

The X-ray diffraction pattern of the amorphous aluminosilicate produced in this example is shown in Fig. 14.

Primary features and advantages of the antibacterial and bactericidal amorphous aluminosilicate composition according to the present invention may be summarized as follows.
1. A relatively small amount of the composition exhibits an excellent antibacterial action against fungi and bacteria.
2. Since the antibacterial composition according to the present invention is inorganic, it is stable in structure and has extremely low vapor pressure (non-volatile) and high heat-resistance in contrast to conventional organic antibacterial agents.
3. The composition according to the present invention is only slightly soluble in water, and the amount of the composition which liquifies out into water is so small that it can be ignored. Therefore, the composition offers a high level of safety.
4. An antibacterial ion which is one of the constituents of the antibacterial composition according to the present invention is stably bonded to an amorphous aluminosilicate which serves as a parent body. Accordingly, the bactericidal action based on the antibacterial ions located at the active points on the porous parent body is carried out even more strongly as compared with known liquid antibacterial agents.
5. The product of the present invention exhibits excellent dispersibility and is therefore expected to be used as a filler for various kinds of polymeric material.
6. The product of the present invention is odorless and chemically stable, so that no structural change occurs and the antibacterial effect is long lasting.
7. The antibacterial composition according to the present invention exhibits an advantageous antibacterial action even in an aqueous solution phase or a solid phase.

It is expected that the antibacterial amorphous aluminosilicate composition according to the present invention which has the above-described features and advantages will be employed as an antibacterial agent over a wide range of fields.

## Claims

1. A process for producing an amorphous aluminosilicate having the formula:
xNa₂O.Al₂O₃.ySiO₂
wherein x is a number between 0.6 and 1.8 inclusive; and y is a number between 1.3 and 50 inclusive; which comprises;
maintaining an alkali solution (Solution-C), the alkalinity of which is within the range of 1.2 - 3.5 N under stirring:
adding a sodium aluminate solution (Solution-A),containing free alkali, and sodium silicate solution or colloidal silica solution (Solution-B) containing free alkali, to Solution-C, separately to prepare a slurry which contains an amorphous sodium aluminosilicate in the form of finely divided particles which are only slightly soluble in water; and
after completing said addition, aging the slurry at 55°C or lower, the addition of Solution-A and Solution-B into Solution-C being carried out so that the Si:Al ratio in the resultant mixture is kept within the range of 2.4 to 7.6 during and after the addition, and mixing effected at 55°C or lower, and Solution-A and Solution-B being prepared so that the alkalinity of the aqueous solution phase during the formation of the slurry and during the aging is kept within ± 0.30 N of the alkalinity of Solution-C.

2. A process according to claim 1 wherein Solution-A, Solution-B and Solution-C are adjusted so that the alkalinity of the resulting slurry is within the range of 1.2 - 3.5 N.

3. A process according to claim 1 or claim 2 wherein Solution-A, Solution-B and Solution-C are adjusted so that the ratio of Na to Al in the slurry is within the range of 1.1 - 6.7.

4. A process for producing an amorphous aluminosilicate according to any one of claims 1 to 3, wherein said amorphous aluminosilicate is in the form of porous fine particles having a specific surface area of at least 5 m²/g and having an average particle size of less than 6»m.

5. A process according to any one of claims 1 to 4 wherein said aging is performed for from 1 to 5 hours.

6. A process for producing an amorphous aluminosilicate having the formula:
xM_{2/n}O.Al₂O₃.ySiO₂
wherein M is at least one element selected from the group consisting of potassium, lithium, calcium, magnesium, cobalt (II), iron (II), nickel (II) and ammonium ion; n is the valence of M; x is a number between 0.6 and 1.8 inclusive; and y is a number between 1.3 and 50 inclusive; which comprises ion-exchanging all or part of the Na in the sodium aluminosilicate of Claim 1 with M by using a solution containing one or more of these metal ions.

7. A process for preparing an amorphous aluminosilicate having an antibacterial and/or bactericidal action of the formula:
xM_{2/n}O.Al₂O₃.ySiO₂
wherein M is at least one element selected from the group consisting of silver, copper, zinc, mercury, tin, lead, bismuth, cadmium and chromium; n is the valence of M; x is a number between 0.6 and 1.8 inclusive; and y is a number between 1.3 and 50 inclusive; which comprises ion-exchanging the Na in the aluminosilicate of claim 1 with at least one element selected from the group consisting of silver, copper, zinc, mercury, tin, lead, bismuth, cadmium and chromium

8. A process for preparing the amorphous aluminosilicate of claim 7 wherein y is a number between 1.3 and 7 inclusive.

9. A process for preparing a composition having an antibacterial and/or bactericidal action, which comprises an amorphous aluminosilicate of the formula:
xM_{2/n}O.Al₂O₃.ySiO₂
wherein M is at least one element selected from the group consisting of silver, copper, zinc, mercury, tin, lead, bismuth, cadmium and chromium; n is the valence of M; x is a number between 0.6 and 1.8 inclusive; and y is a number between 1.3 and 50 inclusive and, an amorphous aluminosilicate of the formula:
x'M'_{2/n'}O.Al₂O₃.y'SiO₂
wherein M' is sodium; n' is the valence of M'; x' is a number between 0.6 and 1.8 inclusive; and y' is a number between 1.3 and 50 inclusive which comprises:
ion-exchanging the Na in the aluminosilicate of claim 1 partially with at least one element selected from the group consisting of silver, copper, zinc, mercury, tin, lead, bismuth, cadmium and chromium.

10. A composition containing amorphous aluminosilicate solid particles characterised in that it comprises an organic polymer and amorphous aluminosilicate solid particles, some or all of which hold metal ions having on ion-exchangeable sites existing on and within the particles, said metal ions having a bactericidal or antibacterial action, said amorphous aluminosilicate solid particles having a specific surface area of at least 5m²/g and a SiO₂/Al₂O₃ molar ratio between 1.3 and 50 inclusive, said metal ions being one or more metal ions selected from silver, copper, zinc, mercury, tin, lead, bismuth, cadmium and chromium.

11. A composition according to claim 10 characterised in that said amorphous aluminosilicate solid particles consist essentially of an amorphous aluminosilicate of the formula:
xM_{2/n}O.Al₂O₃.ySiO₂
wherein M is one element selected from silver, copper, zinc, mercury, tin, lead, bismuth, cadmium, chromium and mixtures thereof; x is a number between 0.6 and 1.8 inclusive, y is a number between 1.3 and 30 inclusive and n is the valence of M,
and an amorphous aluminosilicate of the formula
xM'_{2/n}O.Al₂O₃.ySiO₂
where M' is monovalent or divalent metal having ion exchangeability and different from the element expressed as M, x is a number between 0.6 and 1.8 inclusive, y is a number between 1.3 and 30 inclusive and n is the valence of M'.

12. A composition according to claim 10 characterised in that said amorphous aluminosilicate solid particles have an average particle diameter of 6 »m or less.

13. The use of amorphous aluminosilicate solid particles, some or all of which hold metal ions on ion-exchangeable sites existing on and within the particles, said metal ions having a bactericidal or antibacterial action, said amorphous aluminosilicate solid particles ions having a specific surface area of at least 5m²/g and a SiO₂/Al₂O₃ molar ratio between 1.3 and 50 inclusive, said metal ions being one or more metal ions selected from silver, copper, zinc, mercury, tin, lead, bismuth, cadmium and chromium, as a filler for polymers.

## Patentansprüche

1. Verfahren zur Herstellung eines amorphen Alumosilikats der Formel:
xNa₂O.Al₂O₃.ySiO₂
worin x für eine Zahl zwischen 0,6 und einschließlich 1,8 steht und y eine Zahl zwischen 1,3 und einschließlich 50 darstellt, durch
(fortlaufendes) Rühren einer Alkalilösung (Lösung-C), deren Alkalinität im Bereich von 1,2 - 3,5 N liegt; getrennte Zugabe einer Natriumaluminatlösung (Lösung-A) mit freiem Alkali und einer Natriumsilikatlösung oder kolloidalen Siliziumdioxidlösung (Lösung-B) mit freiem Alkali zu Lösung-C zur Zubereitung einer Aufschlämmung, die ein amorphes Natriumaluminosilikat in Form von in Wasser lediglich schwach löslichen feinteiligen Teilchen enthält, und
Altern der Aufschlämmung bei 55°C oder darunter nach beendeter Zugabe, wobei die Zugabe von Lösung-A und Lösung-B zu Lösung-C derart erfolgt, daß während und nach der Zugabe in dem erhaltenen Gemisch das Si/Al-Verhältnis im Bereich von 2,4 - 7,6 aufrechterhalten wird, das Vermischen bei 55°C oder darunter bewerkstelligt wird und die Lösung-A und die Lösung-B derart zubereitet werden, daß die Alkalinität der wäßrigen Lösungsphase während der Bildung der Aufschlämmung und während der Alterung innerhalb von ± 0,30 N der Alkalinität der Lösung-C gehalten wird.

2. Verfahren nach Anspruch 1, wobei die Lösung-A, die Lösung-B und die Lösung-C derart eingestellt werden, daß die Alkalinität der gebildeten Aufschlämmung im Bereich von 1,2 - 3,5 N liegt.

3. Verfahren nach Anspruch 1 oder 2, wobei die Lösung-A, die Lösung-B und die Lösung-C derart eingestellt werden, daß das Verhältnis Na/Al in der Aufschlämmung im Bereich von 1,1 - 6,7 liegt.

4. Verfahren zur Herstellung eines amorphen Alumosilikats nach einem der Ansprüche 1 bis 3, wobei das amorphe Alumosilikat in Form poröser feiner Teilchen einer spezifischen Oberfläche von mindestens 5 m²/g und einer durchschnittlichen Teilchengröße von unter 6 »m vorliegt.

5. Verfahren nach einem der Ansprüche 1 bis 4, wobei die Alterung während 1 - 5 h durchgeführt wird.

6. Verfahren zur Herstellung eines amorphen Alumosilikats der Formel:
xM_{2/n}O.Al₂O₃.ySiO₂
worin bedeuten:
M mindestens ein Element aus der Gruppe Kalium-, Lithium-, Calcium-, Magnesium-, Kobalt(II)-, Eisen(II)-, Nickel(II)- und Ammoniumion;
n die Wertigkeit von M;
x eine Zahl zwischen 0,6 und einschließlich 1,8 und
y eine Zahl zwischen 1,3 und einschließlich 50,
durch Ionenaustausch des gesamten oder eines Teils des Na in dem Natriumaluminosilikat von Anspruch 1 durch M unter Verwendung einer Lösung mit einem oder mehreren dieser Metallionen.

7. Verfahren zur Herstellung eines amorphen Alumosilikats mit antibakterieller und/oder bakterizider Wirkung der Formel:
xM_{2/n}O.Al₂O₃.ySiO₂
worin bedeuten:
M mindestens ein Element, ausgewählt aus der Gruppe Silber, Kupfer, Zink, Quecksilber, Zinn, Blei, Wismut, Cadmium und Chrom;
n die Wertigkeit von M;
x eine Zahl zwischen 0,6 und einschließlich 1,8 und
y eine Zahl zwischen 1,3 und einschließlich 50,
durch Ionenaustausch des Na in dem Alumosilikat von Anspruch 1 durch mindestens ein Element, ausgewählt aus der Gruppe Silber, Kupfer, Zink, Quecksilber, Zinn, Blei, Wismut, Cadmium und Chrom.

8. Verfahren zur Herstellung des amorphen Alumosilikats nach Anspruch 7, wobei y für eine Zahl zwischen 1,3 und einschließlich 7 steht.

9. Verfahren zur Herstellung einer Zubereitung mit antibakterieller und/oder bakterizider Wirkung, die ein amorphes Alumosilikat der Formel:
xM_{2/n}O.Al₂O₃.ySiO₂
worin bedeuten:
M mindestens ein Element, ausgewählt aus der Gruppe Silber, Kupfer, Zink, Quecksilber, Zinn, Blei, Wismut, Cadmium und Chrom;
n die Wertigkeit von M;
x eine Zahl zwischen 0,6 und einschließlich 1,8 und
y eine Zahl zwischen 1,3 und einschließlich 50, und ein amorphes Alumosilikat der Formel:
x'M'_{2/n'}O.Al₂O₃.y'SiO₂
worin bedeuten:
M' Natrium;
n' die Wertigkeit von M';
x' eine Zahl zwischen 0,6 und einschließlich 1,8 und
y' eine Zahl zwischen 1,3 und einschließlich 50, enthält,
durch teilweisen Ionenaustausch des Na in dem Alumosilikat von Anspruch 1 durch mindestens ein Element, ausgewählt aus der Gruppe Silber, Kupfer, Zink, Quecksilber, Zinn, Blei, Wismut, Cadmium und Chrom.

10. Zubereitung mit festen amorphen Alumosilikatteilchen, dadurch gekennzeichnet, daß sie ein organisches Polymer und feste amorphe Alumosilikatteilchen enthält, wobei einige oder sämtliche derselben auf ionenaustauschbaren Stellen auf den oder innerhalb der Teilchen vorliegende bakterizide oder antibakterielle Wirkung aufweisende Metallionen festhalten, wobei die festen amorphen Alumosilikatteilchen eine spezifische Oberfläche von mindestens 5 m²/g und ein SiO₂/Al₂O₃-Molverhältnis zwischen 1,3 und einschließlich 50 aufweisen und die Metallionen aus einem oder mehreren Metallion(en), ausgewählt aus Silber, Kupfer, Zink, Quecksilber, Zinn, Blei, Wismut, Cadmium und Chrom bestehen.

11. Zubereitung nach Anspruch 10, dadurch gekennzeichnet, daß die festen amorphen Alumosilikatteilchen im wesentlichen aus einem amorphen Alumosilikat der Formel:
xM_{2/n}O.Al₂O₃.ySiO₂
worin bedeuten:
M ein Element, ausgewählt aus Silber, Kupfer, Zink, Quecksilber, Zinn, Blei, Wismut, Cadmium, Chrom und Mischungen derselben;
x eine Zahl zwischen 0,6 und einschließlich 1,8;
y eine Zahl zwischen 1,3 und einschließlich 30 und
n die Wertigkeit von M,
und einem amorphen Alumosilikat der Formel:
xM'_{2/n}O.Al₂O₃.ySiO₂
worin bedeuten:
M' ein von dem Element M verschiedenes ein- oder zweiwertiges Metall mit Ionenaustauschfähigkeit;
x eine Zahl zwischen 0,6 und einschließlich 1,8;
y eine Zahl zwischen 1,3 und einschließlich 30 und
n die Wertigkeit von M',
bestehen.

12. Zubereitung nach Anspruch 10, dadurch gekennzeichnet, daß die festen amorphen Alumosilikatteilchen einen durchschnittlichen Teilchendurchmesser von 6 »m oder weniger aufweisen.

13. Verwendung fester amorpher Alumosilikatteilchen, von denen einige oder sämtliche auf ionenaustauschbaren Stellen auf den und innerhalb der Teilchen vorliegende bakterizide oder antibakterielle Wirkung aufweisende Metallionen festhalten, wobei die festen amorphen Alumosilikatteilchen (Ionen) eine spezifische Oberfläche von mindestens 5 m²/g und ein SiO₂/Al₂O₃-Molverhältnis zwischen 1,3 und einschließlich 50 aufweisen und die Metallionen aus einem oder mehreren Metallion(en), ausgewählt aus Silber, Kupfer, Zink, Quecksilber, Zinn, Blei, Wismut, Cadmium und Chrom bestehen, als Füllstoff für Polymere.

## Revendications

1. Procédé de production d'un aluminosilicate amorphe ayant la formule :
xNa₂O.Al₂O₃.ySiO₂
où x est un nombre compris entre 0,6 et 1,8 inclus ; et y est un nombre compris entre 1,3 et 50 inclus ; qui consiste à :
maintenir une solution alcaline (Solution-C),dont l'alcalinité est comprise entre 1,2 et 3,5 N,sous agitation;
ajouter une solution d'aluminate de sodium (Solution-A), contenant un alcali libre, et une solution de silicate de sodium ou une solution de silice colloïdale (Solution-B) contenant un alcali libre, à la solution-C, séparément,pour préparer une bouillie qui contient un aluminosilicate de sodium amorphe sous la forme de particules finement subdivisées qui ne sont que légèrement solubles dans l'eau ; et
après avoir accompli ladite addition, faire vieillir la bouillie à 55°C ou moins, l'addition de la Solution-A et de la Solution-B dans la solution-C étant effectuée de manière que le rapport Si:Al dans le mélange résultant soit maintenu dans les limites de 2,4 à 7,6 pendant et après l'addition, et mélanger à 55°C ou moins,et la solution-A et la solution-B étant préparées de manière que l'alcalinité de la phase de la solution aqueuse pendant la formation de la bouillie et pendant le vieillissement soit maintenue à ±0,30 N de l'alcalinité de la Solution-C.

2. Procédé selon la revendication 1, où la Solution-A, la Solution-B et la Solution-C sont ajustées de manière que l'alcalinité de la bouillie résultante soit comprise entre 1,2 et 3,5 N.

3. Procédé selon la revendication 1 ou la revendication 2, où la Solution-A, la Solution-B et la Solution-C sont ajustées de manière que le rapport de Na à Al dans la bouillie soit compris entre 1,1 et 6,7.

4. Procédé de production d'un aluminosilicate amorphe selon l'une quelconque des revendications 1 à 3, où ledit aluminosilicate amorphe est sous la forme de particules fines et poreuses ayant une aire superficielle spécifique d'au moins 5 m²/g et ayant une grandeur moyenne de particules de moins de 6 »m.

5. Procédé selon l'une quelconque des revendications 1 à 4, où ledit vieillissement est accompli pendant 1 à 5 heures.

6. Procédé de production d'un aluminosilicate amorphe ayant pour formule
xM_{2/n}O.Al₂O₃.ySiO₂
où M est au moins un élément choisi dans le groupe consistant en ion potassium, lithium, calcium, magnésium, cobalt (II), fer (II), nickel (II) et ammonium ; n est la valence de M ; x est un nombre compris entre 0,6 et 1,8 inclus ; et y est un nombre compris entre 1,3 et 50 inclus; qui comprend l'échange d'ions de la totalité ou d'une partie de Na dans l'aluminosilicate de sodium de la revendication 1, par M, en utilisant une solution contenant un ou plusieurs de ces ions métalliques.

7. Procédé de préparation d'un aluminosilicate amorphe ayant une action antibactérienne et/ou bactéricide de la formule :
xM_{2/n}O.Al₂O₃.ySiO₂
où M est au moins un élément choisi dans le groupe consistant en argent, cuivre, zinc, mercure, étain, plomb, bismuth, cadmium et chrome ; n est la valence de M ; x est un nombre compris entre 0,6 et 1,8 inclus ; y est un nombre compris entre 1,3 et 50 inclus ; qui comprend l'échange d'ions de Na dans l'aluminosilicate de la revendication 1 avec au moins un élément choisi dans le groupe consistant en argent, cuivre, zinc, mercure, étain plomb, bismuth, cadmium et chrome.

8. Procédé de préparation de l'aluminosilicate amorphe de la revendication 7, où y est un nombre compris entre 1,3 et 7 inclus.

9. Procédé de préparation d'une composition ayant une action antibactérienne et/ou bactéricide,qui comprend un aluminosilicate amorphe de la formule :
xM_{2/n}O.Al₂O₃.ySiO₂
où M est au moins un élément choisi dans le groupe consistant en argent, cuivre, zinc, mercure, étain, plomb, bismuth, cadmium et chrome ; n est la valence de M ; x est un nombre compris entre 0,6 et 1,8 inclus ; et y est un nombre compris entre 1,3 et 50 inclus,et un aluminosilicate amorphe de la formule :
x'M'_{2/n}O.Al₂O₃.y'SiO₂
où M' est sodium ; n' est la valence de M' ; x' est un nombre compris entre 0,6 et 1,8 inclus ; et y' est un nombre compris entre 1,3 et 50 inclus, qui comprend :
l'échange d'ions de Na de l'aluminosilicate de la revendication 1 partiellement par au moins un élément choisi dans le groupe consistant en argent, cuivre, zinc, mercure, étain, plomb, bismuth, cadmium et chrome.

10. Composition contenant des particules solides d'aluminosilicate amorphe, caractérisée en ce qu'elle contient un polymère organique et des particules solides d'aluminosilicate amorphe, dont certaines ou toutes contiennent des ions de métal ayant des sites où les ions peuvent être échangés qui existent sur et dans les particules, lesdits ions de métal ayant une action bactéricide ou antibactérienne, lesdites particules solides d'aluminosilicate amorphe ayant une aire superficielle spécifique d'au moins 5 m²/g et un rapport molaire SiO₂/Al₂O₃ entre 1,3 et 50 inclus, lesdits ions métalliques étant un ou plusieurs ions métalliques choisis parmi argent, cuivre, zinc, mercure, étain, plomb, bismuth, cadmium et chrome.

11. Composition selon la revendication 10, caractérisée en ce que lesdites particules solides d'aluminosilicate amorphe se composent essentiellement d'un aluminosilicate amorphe de la formule :
xM_{2/n}O.Al₂O₃.ySiO₂
où M est un élément choisi parmi l'argent, le cuivre, le zinc, le mercure, l'étain, le plomb, le bismuth, le cadmium, le chrome et leurs mélanges ; x est un nombre compris entre 0,6 et 1,8 inclus, y est un nombre compris entre 1,3 et 30 inclus et n est la valence de M, et
un aluminosilicate amorphe de la formule
xM'_{2/n}O.Al₂O₃.ySiO₂
où M' est un métal monovalent ou divalent ayant la capacité d'échange d'ions et différent de l'élément exprimé par M, x est un nombre entre 0,6 et 1,8 inclus, y est un nombre entre 1,3 et 30 inclus et n est la valence de M'.

12. Composition selon la revendication 10, caractérisée en ce que lesdites particules solides d'aluminosilicate amorphe ont un diamètre moyen de particules de 6 »m ou moins.

13. Utilisation de particules solides d'aluminosilicate amorphe dont certaines ou toutes contiennent des ions métalliques sur des sites où les ions peuvent être échangés existant sur ou dans les particules, lesdits ions métalliques ayant une activité bactéricide ou antibactérienne, lesdites particules solides d'aluminosilicate amorphe ayant une aire superficielle spécifique d'au moins 5 m²/g et un rapport molaire SiO₂/Al₂O₃ compris entre 1,3 et 50 inclus, lesdits ions métalliques étant un ou plusieurs ions choisis parmi l'argent, le cuivre, le zinc, le mercure, l'étain, le plomb, le bismuth, le cadmium et le chrome, ainsi qu'une charge pour des polymères.
